(19) Europäisches Patentamt / European Patent Office / Office européen des brevets

(11) **EP 4 737 522 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
$C09C\ 1/48$ (2006.01)  $H01M\ 4/96$ (2006.01)
$H01M\ 8/10$ (2016.01)

(21) Application number: 24832148.1

(22) Date of filing: 28.06.2024

(52) Cooperative Patent Classification (CPC):
Y02E 60/50

(86) International application number:
PCT/JP2024/023655

(87) International publication number:
WO 2025/005292 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 JP 2023108954

(71) Applicant: Nippon Steel Chemical & Material Co.,
Ltd.
Tokyo 103-0027 (JP)

(72) Inventors:
• IIJIMA, Takashi
  Tokyo 100-8071 (JP)
• NEGI, Noriyuki
  Tokyo 100-8071 (JP)
• SHIMIZU, Takayuki
  Tokyo 103-0027 (JP)
• TADOKORO, Kenichiro
  Tokyo 103-0027 (JP)
• MASAKI, Kazuyoshi
  Tokyo 103-0027 (JP)

(74) Representative: SONN Patentanwälte GmbH & Co
KG
Riemergasse 14
1010 Wien (AT)

(54) **OXYGEN-TREATED CARBON BLACK, ACTIVATED CARBON BLACK, CARBON MATERIAL FOR CATALYST CARRIERS OF POLYMER ELECTROLYTE FUEL CELLS, CATALYST LAYER FOR POLYMER ELECTROLYTE FUEL CELLS, AND FUEL CELL**

(57) A carbon material for a catalyst carrier of a solid polymer fuel cell, the carbon material including porous activated carbon black satisfying the following requirements:

(F) a BET specific surface area ($m^2/g$) is from 400 to 1200,

(G) $\Sigma_{2-6}$ is from 0.20 to less than 0.70 in a case in which an integrated value of a volume of a pore having a pore size of from 2 to less than to 6 nm is $\Sigma_{2-6}$ in a mesopore distribution,

(H) $\Sigma_{6-10}/\Sigma_{2-6}$ is 0.120 to 0.500 in a case in which an integrated value of a volume of a pore having a pore size of from 2 to less than to 6 nm is $\Sigma_{2-6}$ and an integrated value of a volume of a pore having a pore size of from 6 to less than to 10 nm is $\Sigma_{6-10}$ in a mesopore distribution, and

(I) $I_D/I_G$ is from 1.20 to 2.20 in a case in which an intensity in a D band is $I_D$ and an intensity in a G band is $I_G$ in a Raman spectrum.

FIG. 1

100

110  130  150  170  160  140  120

EP 4 737 522 A1

**Description**

Technical Field

The present disclosure relates to a carbon material for a catalyst carrier of a solid polymer fuel cell, a catalyst layer for a solid polymer fuel cell, and a fuel cell.

Background Art

A solid polymer fuel cell which is one of fuel batteries includes paired catalyst layers placed on both surfaces of a solid polymer electrolyte membrane, a gas diffusion layer placed outside each of the catalyst layers, and a separator placed outside such each. One catalyst layer of the paired catalyst layers serves as an anode of the solid polymer fuel cell and the other catalyst layer serves as a cathode of the solid polymer fuel cell. In a usual solid polymer fuel cell, plural unit cells each having the above constituent components are stacked in order to obtain the desired output.

A fuel gas such as hydrogen is introduced into the separator on the anode side. The gas diffusion layer on the anode side allows fuel to be diffused and then introduced into the anode. The anode includes a catalyst component, a catalyst carrier carrying a catalyst for a fuel cell, and an electrolyte material having proton conductivity. Hereinafter, a catalyst component promoting an electricity generation reaction (oxidation reaction or reduction reaction described later) in a fuel cell is also referred to as "catalyst for a fuel cell". The catalyst carrier is often constituted from a porous carbon material. The oxidation reaction of the fuel gas occurs to generate protons and electrons on the catalyst for a fuel cell. For example, in a case in which the fuel gas is a hydrogen gas, the following oxidation reaction occurs.

$$H_2 \rightarrow 2H^+ + 2e^- \; (E_0 = 0 \; V)$$

The protons generated in the oxidation reaction are introduced into the cathode through the electrolyte material (ionomer) in the anode and the solid polymer electrolyte membrane. The electrons are introduced into an external circuit through the catalyst carrier, the gas diffusion layer, and the separator. The electrons are worked in the external circuit, and then introduced into the separator on the cathode side. The electrons are then introduced into the cathode through the separator on the cathode side and the gas diffusion layer on the cathode side.

The solid polymer electrolyte membrane is constituted from an electrolyte material having proton conductivity. The solid polymer electrolyte membrane introduces the protons generated in the oxidation reaction, into the cathode.

An oxidizing gas such as an oxygen gas or air is introduced into the separator on the cathode side. The gas diffusion layer on the cathode side allows the oxidizing gas to be diffused and then introduced into the cathode. The cathode includes a catalyst for a fuel cell, a catalyst carrier carrying the catalyst for a fuel cell, and an electrolyte material having proton conductivity. The catalyst carrier is often constituted from a porous carbon material. The reduction reaction of the oxidizing gas occurs to generate water on the catalyst for a fuel cell. For example, in a case in which the oxidizing gas is an oxygen gas or air, the following reduction reaction occurs.

$$O_2 + 4H^+ + 4e^- \rightarrow 2H_2O \; (E_0 = 1.23 \; V)$$

The water generated in the reduction reaction is discharged together with the unreacted oxidizing gas, outside the fuel cell. Thus, the solid polymer fuel cell generates electricity by use of the difference in free energy (difference in potential) generated along with the oxidation reaction of the fuel gas. In other words, the free energy generated in the oxidation reaction is converted to the working to be performed in the external circuit with the electrons.

Meanwhile, porous carbon materials (hereinafter, also referred to as "carbon carriers") applicable to catalyst carriers of solid polymer fuel batteries have been studied and variously proposed.

For example, Patent Literature 1 proposes "A carbon material for a catalyst carrier, in which the carbon material is used in a catalyst carrier of a solid polymer fuel cell and has a three-dimensional dendritic structure three-dimensionally branched, and the following (1) and (2) are simultaneously satisfied.".

(1) The DL/DH is 1.5 or more in a case in which the cumulative distribution [%] of a particle having a size of 1 $\mu$m or less is defined as DL and the cumulative distribution [%] of a particle having a size of more than 1 $\mu$m is defined as DH on the volume size basis in particle size distribution measurement with a laser diffraction/scattering type particle size distribution meter.

(2) The mode diameter in a pore size range of from 20 nm to 200 nm, as measured by a mercury porosimetry method, is from 40 nm to 70 nm.

Patent Literature 2 proposes "A carbon material for a catalyst carrier of a solid polymer fuel cell, in which the carbon material is a porous carbon material, and the following (1), (2), (3) and (4) are simultaneously satisfied.".

(1) The intensity ratio ($I_{750}/I_{peak}$) between the intensity ($I_{750}$) at 750°C and the peak intensity ($I_{peak}$) near 690°C in a derivative thermogravimetric curve (DTG) obtained by thermogravimetric analysis at a rise of temperature of 10°C/min under an air atmosphere is 0.10 or less.
(2) The BET specific surface area determined by BET analysis of a nitrogen gas adsorption isotherm is from 400 to 1500 m$^2$/g.
(3) The integrated volume $V_{2-10}$ of a pore having a pore size of from 2 to 10 nm, as determined by analysis of a nitrogen gas adsorption isotherm with a Dollimore-Heal method, is from 0.4 to 1.5 mL/g.
(4) The amount $V_{macro}$ of nitrogen gas adsorption at a relative pressure of from 0.95 to 0.99, in a nitrogen gas adsorption isotherm, is from 300 to 1200 cc (STP)/g.

Patent Literature 3 proposes "A carbon-based carrier (carbon-based support) for fuel cell catalyst, in which the carbon-based carrier is a solid type carrier, the carbon-based carrier has an outer surface area (external surface area) of from 100 to 450 m$^2$/g, a mesopore volume of from 0.25 to 0.65 cm$^3$/g, and a micropore volume of from 0.01 to 0.05 cm$^3$/g (the outer surface area, the mesopore volume, and the micropore volume are each the arithmetic average of measurement values obtained from five samples randomly taken, with a BET (Brunauer-Emmett-Teller) analyzer (Micromeritics, ASAP-2020)).".

Patent Literature 4 proposes "A carbon carrier for a catalyst, in which the ratio between the cumulative pore volume $V_{2-4}$ of a pore having a diameter of from 2 nm to 4 nm in terms of pore size, and the cumulative pore volume $V_{4-20}$ of a pore having a diameter of from more than 4 nm to 20 nm in terms of pore size, $V_{2-4}/V_{4-20}$, is from 0.20 to 0.55, and the amount of a functional group is from 3% to 10%.".

Patent Literature 5 proposes "A carrier for an electrode catalyst, the catalyst including a porous composite oxide containing tin oxide doped with at least one of P, As, Sb, Bi, V, Nb, Ta, F, or Cl, as a dopant, in which the porous composite oxide contains silica, the volume resistivity of the carrier is 10,000Ω·cm or less, the BET specific surface area of the carrier is from 50 to 300 m$^2$/g, the pore volume of the carrier is 0.2 ml/g or more, and 5% or more in the pore volume of the carrier is occupied by a pore having a pore size of 10 nm or less.".

Patent Literature 1: Japanese Patent Application Laid-Open (JP-A) No. 2022-156985
Patent Literature 2: WO2020/066010
Patent Literature 3: WO2022/085963
Patent Literature 4: JP-A No. 2019-89021
Patent Literature 5: JP-A No. 2017-162572

SUMMARY OF INVENTION

Technical Problem

Both electricity generation characteristics and durability to be satisfied in a solid polymer fuel cell (hereinafter, also referred to as "PEFC") are important characteristics for spreading a fuel cell vehicle (hereinafter, also referred to as "FCV"), and correspond to an essential object to be achieved for a commercial vehicle whose market is expected to be grown in future.

In general, one main cause of a decrease in durability of PEFC is degradation of a catalyst, and factors thereof are oxidative consumption of a carbon carrier and melting of a platinum nanoparticle. These two factors are each caused by the variation in electrode potential, in particular, the variation in potential including one in a high potential range of more than 1 V.

A solution for platinum melting is an increase in particle size for winning the time until such melting.

A solution for oxidative consumption of a carbon carrier is to increase crystallinity (namely, increase the size in the in-plane direction of a crystallite and increase the layering thickness) for the purpose of suppression of oxidative consumption of a carbon carrier, and thus decrease the area of an edge of a carbon net sheet serving as the point of origin of oxidative consumption and accordingly lower the oxidation speed.

Electricity generation characteristics mainly depend on two factors, the attributable fraction (hereinafter, also referred to as "rate of catalyst utilization") to the reaction of a metal catalyst (platinum nanoparticle or the like) and the diffusivity of an oxidizing gas. A pore structure of a carbon carrier (porous carbon material) correlates to the rate of catalyst utilization and a steric structure (for example, dendritic structure) of the carbon carrier correlates to gas diffusivity.

Although a pore suited for gas diffusion is not clear, the pore size of a void in a catalyst layer for nucleic acid, to be estimated from various carbon carriers currently applied, is from about several tens to 100 nm. Such a void in a catalyst layer is realized in a steric structure (specifically, an aggregate structure of carbon black, or the like) of a carbon carrier.

It is desirable for the pore structure that only a pore having a necessary and sufficient size for allowing a several-nm metal catalyst (platinum nanoparticle or the like) to be present in the pore is selectively present, and mesoporous carbon is generally considered to be suited for a carrier.

However, conventional techniques including those in Patent Literature 1 to Patent Literature 5 still have room for improvement in achievement of both electricity generation characteristics (in particular, low-load characteristics) and durability.

Patent Literature 1 and Patent Literature 2, although provide a material-special pore structure suited for a catalyst carrier and exhibit excellent electricity generation characteristics, have room for improvement in order to satisfy durability (oxidative consumption resistance) for a heavy-duty vehicle (HDV) application such as a long-haul truck.

Patent Literature 3, although allows for pore (mainly mesopore) formation on acetylene black and imparts very excellent durability and excellent electricity generation characteristics in a running environment highly humidified, has room for improvement in low-load characteristics corresponding to main important characteristics in practical use.

Patent Literature 4 is presumed to try to achieve both durability and electricity generation characteristics by an oxygen-containing functional group imparted, in order to increase durability by heating treatment with Ketjen black as a raw material, increase water repellency by heating, and prevent moisture-retaining properties of a catalyst layer from decreasing. However, a decrease in pore volume by heating treatment leads to decreases in electricity generation characteristics, and there is room for improvement in achievement of both (in particular, low-load characteristics) and durability at high levels.

Patent Literature 5, although shows an oxide catalyst carrier having a pore structure, results in decreases in electricity generation characteristics including low-load characteristics, for example, causes high contact resistance of oxides and large ohmic resistance of a catalyst layer even with bare sufficient conductivity of oxide itself.

Thus, conventional techniques still have room for improvement in both electricity generation characteristics (in particular, low-load characteristics) and durability to be achieved. Additionally, the improvement is demanded to be realized with inexpensive and useful carbon black among carbon carriers (porous carbon materials).

An object of the disclosure is then to provide a carbon material for a catalyst carrier of a solid polymer fuel cell, in which the carbon material is excellent in not only electricity generation characteristics (in particular, low-load characteristics), but also durability, as well as a catalyst layer for a solid polymer fuel cell, and a fuel cell, in which the carbon material is utilized.

Another object of the disclosure is to provide oxygen-treated carbon black and activated carbon black each suited for obtaining a carbon material for a catalyst carrier of a solid polymer fuel cell, in which the carbon material is excellent in not only electricity generation characteristics (in particular, low-load characteristics), but also durability.

Solution to Problem

Solutions for solving the problems include the following aspects.

<1> Oxygen-treated carbon black satisfying the following requirement (A):

(A) a content of oxygen (% by mass) is from $S_{BET}/100$ to 8.00 in a case in which a BET specific surface area calculated by nitrogen gas adsorption is $S_{BET}$ ($m^2/g$).

<2> The oxygen-treated carbon black according to <1>, further satisfying the following requirement (B):
(B) $S_{BET}$ ($m^2/g$) is from 5500/D to 500 in a case in which the BET specific surface area calculated by nitrogen gas adsorption is $S_{BET}$ ($m^2/g$) and a primary particle size of the oxygen-treated carbon black is D (nm).
<3> Activated carbon black simultaneously satisfying the following requirements (C), (D), and (E):

(C) a BET specific surface area ($m^2/g$) calculated by nitrogen gas adsorption isotherm measurement is from 700 to 1500,
(D) $\Sigma_{2\text{-}6}$ is from 0.22 to less than 1.00 in a case in which an integrated value of a pore volume of a pore having a pore size of from 2 nm to less than 6 nm, in a mesopore distribution determined by analysis of a nitrogen gas adsorption isotherm with a BJH (Barrett Joyner Halenda) method, is $\Sigma_{2\text{-}6}$, and
(E) $\Sigma_{6\text{-}10}/\Sigma_{2\text{-}6}$ is from 0.100 to 0.490 in a case in which an integrated value of a pore volume of a pore having a pore size of from 2 nm to less than 6 nm is $\Sigma_{2\text{-}6}$ and an integrated value of a pore volume of a pore having a pore size of from 6 nm to less than 10 nm is $\Sigma_{6\text{-}10}$ in a mesopore distribution determined by analysis of a nitrogen gas adsorption isotherm with a BJH (Barrett Joyner Halenda) method.

<4> A carbon material for a catalyst carrier of a solid polymer fuel cell, the carbon material including porous activated carbon black simultaneously satisfying the following requirements (F), (G), (H), and (I):

(F) a BET specific surface area ($m^2$/g) by nitrogen gas adsorption measurement is from 400 to 1200,

(G) $\Sigma_{2-6}$ is from 0.20 to less than 0.70 in a case in which an integrated value of a pore volume of a pore having a pore size of from 2 nm to less than 6 nm, in a mesopore distribution determined by analysis of a nitrogen gas adsorption isotherm with a BJH (Barrett Joyner Halenda) method, is $\Sigma_{2-6}$,

(H) $\Sigma_{6-10}/\Sigma_{2-6}$ is from 0.120 to 0.500 in a case in which an integrated value of a pore volume of a pore having a pore size of from 2 nm to less than 6 nm is $\Sigma_{2-6}$ and an integrated value of a pore volume of a pore having a pore size of from 6 nm to less than 10 nm is $\Sigma_{6-10}$ in a mesopore distribution determined by analysis of a nitrogen gas adsorption isotherm with a BJH (Barrett Joyner Halenda) method, and

(I) $I_D/I_G$ is from 1.20 to 2.20 in a case in which an intensity in a D band of from 1300 to 1360 $cm^{-1}$ is designated as $I_D$ and an intensity in a G band of from 1560 to 1620 $cm^{-1}$ is designated as $I_G$ in a Raman spectrum obtained by Raman spectrometry.

<5> A catalyst layer for a solid polymer fuel cell, the catalyst layer including the carbon material for a catalyst carrier of a solid polymer fuel cell according to <4>.

<6> A fuel cell including the catalyst layer for a solid polymer fuel cell according to <5>.

<7> The fuel cell according to <6>, wherein the catalyst layer for a solid polymer fuel cell is a catalyst layer on the cathode side.

Advantageous Effects of Invention

According to the disclosure, a carbon material for a catalyst carrier of a solid polymer fuel cell, in which the carbon material is excellent in not only electricity generation characteristics (in particular, low-load characteristics), but also durability, as well as a catalyst layer for a solid polymer fuel cell, and a fuel cell, in which the carbon material is utilized are provided.

According to the disclosure, oxygen-treated carbon black and activated carbon black each suited for obtaining a carbon material for a catalyst carrier of a solid polymer fuel cell, in which the carbon material is excellent in not only electricity generation characteristics (in particular, low-load characteristics), but also durability, are provided.

BRIEF DESCRIPTION OF DRAWINGS

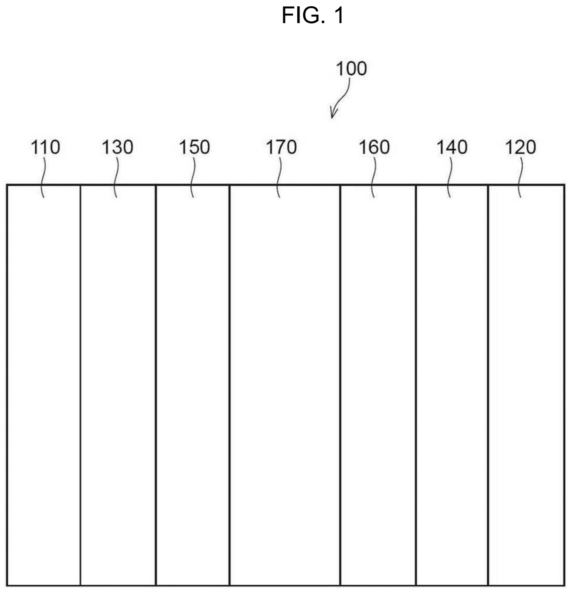

[FIG. 1] FIG. 1 is a schematic view illustrating one example of an outline configuration of the fuel cell of the disclosure.

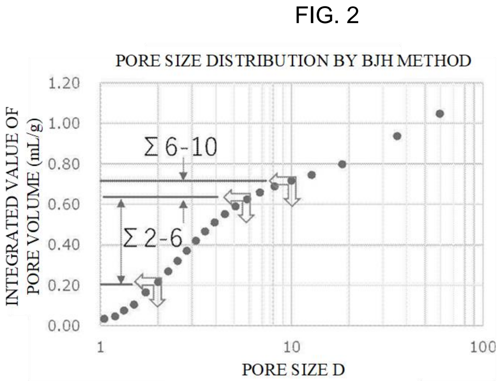

[FIG. 2] FIG. 2 is a graph for explaining the integrated value $\Sigma_{2-6}$ of the pore volume of a pore having a pore size of from 2 nm to less than 6 nm and the integrated value $\Sigma_{2-6}$ of the pore volume of a pore having a pore size of from 2 nm to less than 6 nm and the integrated value $\Sigma_{6-10}$ of the pore volume of a pore having a pore size of from 6 nm to less than 10 nm in a mesopore distribution determined by analysis of a nitrogen gas adsorption isotherm with a BJH (Barrett Joyner Halenda) method.

DESCRIPTION OF EMBODIMENTS

One example of the disclosure is described.

A numerical value range represented by "(from) ... to ..." in the disclosure means that the range encompasses respective numerical values described before and after "to" as a lower limit and an upper limit. A numerical value range in the case of "more than" or "less than" attached to a numerical value described before or after "to" means that such a numerical value is not included as a lower limit value or an upper limit value.

The term "step" in the disclosure encompasses not only an independent step, but also a step that can achieve a predetermined object even in the case of being not clearly distinguished from other steps.

In the disclosure, the "electrolyte material having proton conductivity" used in the catalyst layer of the fuel cell is also referred to as "ionomer".

<Oxygen-Treated Carbon Black, Activated Carbon Black, and Carbon Material for Catalyst Carrier of Solid Polymer Fuel Cell>

The oxygen-treated carbon black of the disclosure satisfies requirement (A) described later. The oxygen-treated carbon black of the disclosure preferably satisfies requirement (B) described later.

The activated carbon black of the disclosure simultaneously satisfies requirements (C), (D), and (E) described later.

The carbon material for a catalyst carrier of a solid polymer fuel cell of the disclosure includes porous activated carbon black simultaneously satisfying requirements (F), (G), (H), and (I) described later.

The oxygen-treated carbon black of the disclosure is carbon black obtained by applying oxygen treatment to raw material carbon black.

The activated carbon black of the disclosure is carbon black obtained by applying first activation to the oxygen-treated carbon black of the disclosure and making a pore.

The carbon material (porous activated carbon black) for a catalyst carrier of the disclosure is a carbon material (carbon black made porous) enhanced in crystallinity, obtained by applying heat treatment and second activation to the activated carbon black of the disclosure.

In other words, the oxygen-treated carbon black of the disclosure corresponds to an intermediate for producing the activated carbon black and the porous activated carbon black of the disclosure.

The activated carbon black of the disclosure corresponds to an intermediate for producing the carbon material for a catalyst carrier of the disclosure (porous activated carbon black).

The carbon material (porous activated carbon black) for a catalyst carrier of the disclosure is a carbon material excellent in not only electricity generation characteristics (in particular, low-load characteristics), but also durability.

The oxygen-treated carbon black and the activated carbon black of the disclosure are each carbon black suited for a carbon material (namely, activated carbon black made porous) excellent in not only electricity generation characteristics (in particular, low-load characteristics), but also durability.

The carbon material for a catalyst carrier, the oxygen-treated carbon black and the activated carbon black of the disclosure have been found based on the following findings.

In general, electricity generation characteristics of a fuel cell largely depend on overvoltage of a cathode reaction. The following three factors are considered to be main factors for overvoltage in a cathode electrode.

(1) Combining of two types of resistance, electron conduction resistance and proton conduction resistance, depending on the magnitude of ohmic resistance of a catalyst layer
(2) Diffusion resistance of an oxidizing gas in a catalyst layer
(3) Electrochemical resistance, namely, resistance in a chemical reaction along with electron transfer on a catalytic metal surface (namely, resistance in a catalyst reaction)

Among the main factors, a decrease in "(3) Resistance of catalyst reaction", in particular, a factor governing the rate of utilization of a catalytic metal is whether or not a catalytic metal in a pore in the porous activated carbon black is in contact with an ionomer, and is ease of penetration of an ionomer into a pore in the porous activated carbon black.

The inventors have made studies about a pore size distribution of gas adsorption of a pore suited for carrying of a catalytic metal and also suited for penetration of an ionomer, about the factor "(3) Resistance in catalyst reaction". As a result, the following findings have been obtained.

(A) An optimal pore size for penetration of an ionomer and carrying of a catalytic metal in the porous activated carbon black as the carbon material for a catalyst carrier can be determined by quantitatively evaluating a pore size distribution selectively formed in terms of only such a pore size, by a pore size distribution of nitrogen gas adsorption. Specifically, it is important for a pore structure allowing for carrying of a catalytic metal into a pore and also easy penetration of an ionomer into a pore to increase the pore volume of a pore having a pore size of from 2 nm to less than 6 nm and decrease the pore volume of a pore having a pore size of from 6 nm to 10 nm as much as possible.
(B) Oxygen treatment is applied to raw material carbon black, whereby oxygen-treated carbon black satisfying the requirement (A) is obtained. The oxygen treatment is here treatment in which raw material carbon black is oxidized at a low temperature, thereby forming a pore on the raw material carbon black and simultaneously providing a large number of oxygen-containing functional groups into such a pore.
A pore having an oxygen-containing functional group in oxygen-treated carbon black is presumed to serve to introduce an activation gas such as water vapor or $CO_2$ inside the oxygen-treated carbon black and simultaneously form a surface structure in which such an oxygen-containing functional group allows activation to progress, during first activation. Thus, activated carbon black made porous and satisfying requirements (C) to (E) are obtained.
(C) The pore structure in activated carbon black, made with (A) and (B) described above, is subjected to heat treatment performed in an inert atmosphere in order to enhance durability. However, an adverse reaction, namely, collapse of a pore, is caused during this process. In the case of direct use as a catalyst carrier, decreases in electricity generation characteristics (in particular, low-load characteristics) are caused mainly by a small pore volume, or a small BET specific surface area. A pore structure close to that before heat treatment, in the state of being suppressed in surface roughness, is formed by again performing second activation with activation gas such as water vapor or $CO_2$ after heat

treatment. Thus, porous activated carbon black satisfying requirements (F) to (I) is obtained.

It has been found from the above findings that the carbon material for a catalyst carrier of the disclosure is a carbon material excellent in not only electricity generation characteristics (in particular, low-load characteristics), but also durability.

It has also been found that the oxygen-treated carbon black and the activated carbon black of the disclosure each serve as carbon black suited for obtaining a carbon material (namely, activated carbon black made porous) excellent in not only electricity generation characteristics (in particular, low-load characteristics), but also durability.

Hereinafter, the details of the oxygen-treated carbon black, the activated carbon black, and the carbon material for a catalyst carrier (namely, porous activated carbon black) of the disclosure are described.

[Oxygen-Treated Carbon Black]

Commercially available raw material carbon black, although considered to have no pore, actually differs in size of surface area due to nitrogen gas adsorption even at the same particle size. A tendency is confirmed in which, as the particle size is smaller, the surface area is larger.

In a case in which raw material carbon black is selected from the viewpoint of first activation, raw material carbon black large in BET specific surface area leads to a large pore volume of a pore formed after first activation and also a large BET specific surface area in the case of the same particle size.

In this regard, in order to develop a pore structure by first activation, the content of oxygen in the oxygen-treated carbon black to be subjected to first activation is more preferably higher. The reason for this phenomenon is considered because a site to be converted to $CO_2$ and burn down by activation possibly correlates to a site much containing oxygen. In other words, a crystallite site to which an oxygen-containing functional group is attached is presumed to serve as the point of origin for selective oxidation by activation.

Oxygen treatment with air is applied to raw material carbon black, as treatment provided by an oxygen-containing functional group (namely, treatment providing the simultaneous occurrence of increases in content of oxygen and BET specific surface area). Specifically, raw material carbon black is heat-treated under flowing of an oxidation gas containing oxygen as an oxidant (for example, an oxidation gas diluted with air and an inert gas).

Oxidation-treated carbon black obtained by oxygen treatment suited for such objects satisfies requirement (A), preferably satisfies requirements (A) and (B).

(Requirement (A))

(A) The content of oxygen (% by mass) is from $S_{BET}/100$ to 8.00 in a case in which the BET specific surface area calculated by nitrogen gas adsorption is $S_{BET}$ ($m^2/g$).

During oxygen treatment of raw material carbon black by an oxidation gas, a pore is formed with the raw material carbon black and the BET specific surface area increases. Various functional groups containing oxygen are simultaneously introduced on a surface of the pore. The types of such functional groups are presumed to be changed depending on the temperature of oxygen treatment.

For example, a carboxy group is lowest in thermal stability, and the amount of presence thereof is small specifically in oxygen treatment at an oxygen treatment temperature of 350°C or more. An oxygen treatment temperature of more than 500°C also results in significant decreases in the amount of presence of a hydroxyl group and a lactone group. Oxygen-containing functional groups of cyclic ether-type, quinone-type, and the like are stable functional groups at a high temperature range of oxygen treatment temperature of 500°C or more.

In a case in which oxygen-treated carbon black after oxygen treatment is subjected to first activation in an atmosphere of an activation gas such as water vapor or $CO_2$ at a temperature of 800°C or more, many oxygen-containing functional groups desorb as $CO_2$ gases. Thus, it is presumed that the action occurs in which such an oxygen-containing functional group carries away a carbon atom on a pore surface to which this group is attached, and thus spreads a pore by a volume corresponding to one carbon atom. It is also presumed that the action occurs in which an aromatic ring is broken to allow a first activation reaction to easily progress during desorption of such an oxygen-containing functional group.

The above actions occur regardless of the type of such an oxygen-containing functional group, and the content of oxygen in the oxygen-treated carbon black can be quantitatively defined depending on pore development by first activation.

The content of oxygen in the oxygen-treated carbon black increases in a positive correlation manner relative to the BET specific surface area, and thus a preferred range of the content of oxygen is a function of the BET specific surface area.

A lower limit in the oxygen-treated carbon black of $S_{BET}/100\%$ by mass or more leads to pore development at a specified pore size in first activation.

The upper limit in the oxygen-treated carbon black is determined by the BET specific surface area because excess oxygen treatment leads to surface roughness. Accordingly, the upper limit of the content of oxygen in the oxygen-treated carbon black depends on the upper limit of the BET specific surface area of the oxygen-treated carbon black. Specifically, the upper limit of the content of oxygen in the oxygen-treated carbon black is 8.00% by mass or less.

In a case in which the content of oxygen in the oxygen-treated carbon black is less than $S_{BET}/100\%$ by mass, the amount of an oxygen-containing functional group in the oxygen-treated carbon black is so small that contribution of first activation to pore development at a specified pore size cannot be confirmed. As a result, electricity generation characteristics (in particular, low-load characteristics) are not improved.

In a case in which the content of oxygen in the oxygen-treated carbon black is more than 8.00% by mass, the surface roughness of the oxygen-treated carbon black is so large that nonuniformity is caused on a cover of porous activated carbon black with an ionomer. As a result, the amount of an ionomer penetrating into a pore decreases and the rate of catalyst utilization decreases, thereby finally leading to decreases in electricity generation characteristics (in particular, low-load characteristics).

The lower limit value of the content of oxygen in the oxygen-treated carbon black is preferably $S_{BET}/90\%$ by mass or more, more preferably $S_{BET}/80\%$ by mass or more.

The upper limit value of the content of oxygen in the oxygen-treated carbon black is preferably 7.50% by mass or less, more preferably 7.00% by mass or less.

The BET specific surface area is a value measured by a method described in Examples below.

(Requirement (B))

(B) The $S_{BET}$ ($m^2/g$) is from 5500/D to 500 in a case in which the BET specific surface area calculated by nitrogen gas adsorption is $S_{BET}$ ($m^2/g$) and a primary particle size of the oxygen-treated carbon black is D (nm).

The BET specific surface area $S_{BET}$ ($m^2/g$) of the oxygen-treated carbon black, for example, that of commercially available furnace black can be approximately expressed with Formula: $S_{BET} = 2400/DF$ (wherein DF is the primary particle size (nm) of carbon black as furnace black), under the assumption that the density of the oxygen-treated carbon black is constant.

The BET specific surface area of a pore introduced by oxygen treatment is added to the BET specific surface area of raw material carbon black in the BET specific surface area of the oxygen-treated carbon black. The BET specific surface area added is also disproportionate to the primary particle size.

Therefore, the lower limit value of the BET surface area $S_{BET}$ of the oxygen-treated carbon black, for the purpose of producing a minimum effect on pore development at a specified pore size in first activation, is preferably 5500/D $m^2/g$ or more.

The upper limit value of the BET surface area $S_{BET}$ of the oxygen-treated carbon black is preferably 500 $m^2/g$ or less. In a case in which the BET surface area $S_{BET}$ of oxygen-treated carbon black is more than 500 $m^2/g$, the surface roughness of the oxygen-treated carbon black is so large that nonuniformity is caused on a cover of porous activated carbon black with an ionomer. As a result, the amount of an ionomer penetrating into a pore decreases and the rate of catalyst utilization decreases, thereby finally leading to decreases in electricity generation characteristics (in particular, low-load characteristics).

The lower limit value of the BET surface area $S_{BET}$ of the oxygen-treated carbon black is more preferably 5600/D $m^2/g$ or more, still more preferably 5800/D $m^2/g$ or more.

The upper limit value of the BET surface area $S_{BET}$ of the oxygen-treated carbon black is preferably 480 $m^2/g$ or less, more preferably 460 $m^2/g$ or less.

The primary particle size is a value measured by a method described in Examples below.

The primary particle size of the oxygen-treated carbon black is comparable with the primary particle size of raw material carbon black, and is preferably from 20 nm to 80 nm.

[Activated Carbon Black]

It is important for the pore structure of porous activated carbon black suited for a catalyst carrier that (1) many sites for carrying a catalytic metal are present (the BET cover area is large), (2) the pore volume of a pore having a pore size of from 2 nm to less than 6 nm, suited for receiving a catalytic metal having a size of from 2 to 5 nm, is large, and (3) only a pore having a required pore size is present and the pore volume of a small pore of from 6 nm to 10 nm, corresponding to surface roughness leading to decreases in electricity generation characteristics (in particular, low-load characteristics), is relatively small to the pore volume of a pore having a pore size of from 2 nm to less than 6 nm.

The activated carbon black of the disclosure, suited for such objects, which is an intermediate for porous activated carbon black as a catalyst carrier, satisfies the following requirements (C), (D), and (E).

(Requirement (C))

(C) The BET specific surface area ($m^2/g$) calculated by nitrogen gas adsorption isotherm measurement is from 700 to 1500.

In a case in which the BET specific surface area of the activated carbon black is less than 700 $m^2/g$, the BET surface area of the activated carbon black after heat treatment is too small. Therefore, a sufficient BET surface area causing not surface roughness cannot be obtained in second activation. As a result, electricity generation characteristics (in particular, low-load characteristics) decrease.

In a case in which the BET specific surface area of the activated carbon black is more than 1500 $m^2/g$, the thickness of a carbon wall shaping a pore corresponds to several carbon layers. Therefore, even in a case in which the activated carbon black is tried to be highly crystallized by heat treatment, the thickness of carbon layers layered is thin, and thus durability cannot be enhanced.

The lower limit value of the BET specific surface area of the activated carbon black is preferably 750 $m^2/g$ or more, more preferably 800 $m^2/g$ or more.

The upper limit value of the BET specific surface area of the activated carbon black is preferably 1450 $m^2/g$ or less, more preferably 1400 $m^2/g$ or less.

The BET specific surface area is a value measured by a method described in Examples below.

(Requirement (D))

(D) The $\Sigma_{2-6}$ is from 0.22 to less than 1.00 in a case in which the integrated value of the pore volume of a pore having a pore size (namely, pore diameter) of from 2 nm to less than 6 nm is $\Sigma_{2-6}$ in a mesopore distribution determined by analysis of a nitrogen gas adsorption isotherm with a BJH (Barrett Joyner Halenda) method.

In a case in which the integrated value $\Sigma_{2-6}$ of the pore volume of the activated carbon black is less than 0.22, the integrated value $\Sigma_{2-6}$ of the pore volume of porous activated carbon black in which heat treatment and second activation are applied to the activated carbon black is also smaller. Thus, the amount of carrying of a catalytic metal per unit mass of the porous activated carbon black is smaller, and the amount of carbon is larger in order to make the amount of a catalytic metal constant. An increase in the thickness of the corresponding catalyst layer is then caused. Such an increase in the thickness of the catalyst layer inhibits gas diffusion in the catalyst layer and thus leads to decreases in electricity generation characteristics (in particular, low-load characteristics).

In a case in which the integrated value $\Sigma_{2-6}$ of the pore volume of the activated carbon black is 1.00 or more, the thickness of a carbon wall shaping a pore is very thin. Therefore, even in a case in which the activated carbon black is tried to be highly crystallized by heat treatment, the thickness of carbon layers layered is thin, and thus durability cannot be enhanced.

The lower limit value of the integrated value $\Sigma_{2-6}$ of the pore volume of the activated carbon black is preferably 0.23 or more, more preferably 0.24 or more.

The upper limit value of the integrated value $\Sigma_{2-6}$ of the pore volume of the activated carbon black is preferably 0.95 or less, more preferably 0.90 or less.

The integrated value $\Sigma_{2-6}$ of the pore volume in the mesopore distribution is a value measured by a method described in Examples below.

(Requirement (E))

(E) The $\Sigma_{6-10}/\Sigma_{2-6}$ is from 0.100 to 0.490 in a case in which the integrated value of the pore volume of a pore having a pore size (namely, pore diameter) of from 2 nm to less than 6 nm is $\Sigma_{2-6}$ and the integrated value of the pore volume of a pore having a pore size (namely, pore diameter) of from 6 nm to less than 10 nm is $\Sigma_{6-10}$ in a mesopore distribution determined by analysis of a nitrogen gas adsorption isotherm with a BJH (Barrett Joyner Halenda) method.

The lower limit value of the ratio $\Sigma_{6-10}/\Sigma_{2-6}$ of the activated carbon black indicates a limit value which can be substantially achieved with encompassing prediction even in a case in which a micropore in the activated carbon black is excessively introduced and first activation with an activation gas such as water vapor or $CO_2$ is allowed to carefully progress, therefore the lower limit value of the ratio $\Sigma_{6-10}/\Sigma_{2-6}$ of the activated carbon black is 0.100, and, as the ratio is closer to the lower limit value, electricity generation characteristics (in particular, low-load characteristics) are more enhanced.

In a case in which the ratio $\Sigma_{6-10}/\Sigma_{2-6}$ of the activated carbon black is more than 0.490, surface roughness of the activated carbon black is so large that nonuniformity is caused on a cover of porous activated carbon black with an ionomer.

As a result, the amount of an ionomer penetrating into a pore decreases and the rate of catalyst utilization decreases, thereby finally leading to decreases in electricity generation characteristics (in particular, low-load characteristics).

The lower limit value of the ratio $\Sigma_{6\text{-}10}/\Sigma_{2\text{-}6}$ of the activated carbon black is preferably 0.110 or more, more preferably 0.120 or more.

The upper limit value of the ratio $\Sigma_{6\text{-}10}/\Sigma_{2\text{-}6}$ of the activated carbon black is preferably 0.480 or less, more preferably 0.470 or less.

The ratio $\Sigma_{6\text{-}10}/\Sigma_{2\text{-}6}$ in the mesopore distribution is a value measured by a method described in Examples below.

[Carbon Material for Catalyst Carrier (Porous Activated Carbon Black)]

The pore structure of porous activated carbon black suited for a catalyst carrier is common with the pore structure of the activated carbon black serving as an intermediate. However, such porous activated carbon black is demanded to have a pore structure in which a pore structure of the activated carbon black is more developed, in order that heat treatment and second activation of the activated carbon black not only enhance the crystallinity (namely, durability) of the activated carbon black, but also provide a pore structure having a certain pore volume.

Porous activated carbon black as a catalyst carrier, suited for such objects, satisfies the following requirements (F), (G), (H), and (I).

(Requirement (F))

(F) The BET specific surface area (m$^2$/g) by nitrogen gas adsorption measurement is from 400 to 1200.

In a case in which the BET specific surface area of porous activated carbon black is less than 400 m$^2$/g, carrying of a large number of catalytic metals in a particle as much as possible, as an advantage of porous activation carbon black, cannot be achieved. Thus, porous activated carbon black required for carrying the same number of catalytic metals increases in terms of number. In other words, a catalyst layer is thicker. As a result, the diffusion distance of an oxidizing gas in such a catalyst layer is elongated, leading to decreases in low-load characteristics.

In a case in which the BET specific surface area of porous activated carbon black is more than 1200 m$^2$/g, the thickness of a carbon wall forming a pore structure is thinner. Specifically, the average number of carbon net sheets layered is 3 sheets or less, and not only mechanical strength is weakened, but also the number of sheets layered is thinner during oxidative consumption of a carbon wall with a nano-sized catalytic metal, and structural breakage easily occurs in spite of a small amount of carbon consumed. Decreases in electricity generation characteristics according to duration are accelerated.

The lower limit value of the BET specific surface area of porous activated carbon black is preferably 450 m$^2$/g or more, more preferably 500 m$^2$/g or more.

The upper limit value of the BET specific surface area of porous activated carbon black is preferably 1150 m$^2$/g or less, more preferably 1100 m$^2$/g or less.

The BET specific surface area is a value measured by a method described in Examples below.

(Requirement (G))

(G) The $\Sigma_{2\text{-}6}$ is from 0.20 to less than 0.70 in a case in which the integrated value of the pore volume of a pore having a pore size (namely, pore diameter) of from 2 nm to less than 6 nm, in a mesopore distribution determined by analysis of a nitrogen gas adsorption isotherm with a BJH (Barrett Joyner Halenda) method, is $\Sigma_{2\text{-}6}$.

In a case in which the integrated value $\Sigma_{2\text{-}6}$ of the pore volume of porous activated carbon black is less than 0.20, the pore volume of porous activated carbon black is smaller. Thus, the amount of carrying of a catalytic metal per unit mass of porous activated carbon black is smaller and the amount of carbon is larger in order to make the amount of a catalytic metal constant. An increase in the thickness of the corresponding catalyst layer is then caused. Such an increase in the thickness of the catalyst layer inhibits gas diffusion in the catalyst layer and thus leads to decreases in electricity generation characteristics (in particular, low-load characteristics).

In a case in which the integrated value $\Sigma_{2\text{-}6}$ of the pore volume of porous activated carbon black is 0.70 or more, the thickness of a carbon wall shaping a pore is very thin. Therefore, durability cannot be enhanced.

The lower limit value of the integrated value $\Sigma_{2\text{-}6}$ of the pore volume of porous activated carbon black is preferably 0.22 or more, more preferably 0.23 or more, still more preferably 0.24 or more.

The upper limit value of the integrated value $\Sigma_{2\text{-}6}$ of the pore volume of porous activated carbon black is preferably 0.68 or less, more preferably 0.65 or less.

The integrated value $\Sigma_{2\text{-}6}$ of the pore volume in the mesopore distribution is a value measured by a method described in Examples below.

(Requirement (H))

(H) The $\Sigma_{6\text{-}10}/\Sigma_{2\text{-}6}$ is from 0.120 to 0.500 in a case in which an integrated value of a pore volume of a pore having a pore size of from 2 nm to less than 6 nm is $\Sigma_{2\text{-}6}$ and an integrated value of a pore volume of a pore having a pore size of from 6 nm to less than 10 nm is $\Sigma_{6\text{-}10}$ in a mesopore distribution determined by analysis of a nitrogen gas adsorption isotherm with a BJH (Barrett Joyner Halenda) method.

The lower limit value of the ratio $\Sigma_{6\text{-}10}/\Sigma_{2\text{-}6}$ of porous activated carbon black indicates a limit value which can be substantially achieved with encompassing prediction even in a case in which a micropore in porous activated carbon black is excessively introduced and second activation with an activation gas such as water vapor or $CO_2$ is allowed to carefully progress, therefore the lower limit value of the ratio $\Sigma_{6\text{-}10}/\Sigma_{2\text{-}6}$ of porous activated carbon black is 0.120, and, as the ratio is closer to the lower limit value, electricity generation characteristics (in particular, low-load characteristics) are more enhanced.

In a case in which the ratio $\Sigma_{6\text{-}10}/\Sigma_{2\text{-}6}$ of porous activated carbon black is more than 0.500, the surface roughness of porous activated carbon black is so large that nonuniformity is caused on a cover of porous activated carbon black with an ionomer. As a result, the amount of an ionomer penetrating into a pore decreases and the rate of catalyst utilization decreases, thereby finally leading to decreases in electricity generation characteristics (in particular, low-load characteristics).

The lower limit value of the ratio $\Sigma_{6\text{-}10}/\Sigma_{2\text{-}6}$ of porous activated carbon black is preferably 0.125 or more, more preferably 0.130 or more.

The upper limit value of the ratio $\Sigma_{6\text{-}10}/\Sigma_{2\text{-}6}$ of porous activated carbon black is preferably 0.380 or less, more preferably 0.370 or less, still more preferably 0.360 or less.

The ratio $\Sigma_{6\text{-}10}/\Sigma_{2\text{-}6}$ in the mesopore distribution is a value measured by a method described in Examples below.

(Requirement (I))

(I) The $I_D/I_G$ is from 1.20 to 2.20 in a case in which the intensity in a D band of from 1300 to 1360 cm$^{-1}$ is designated as $I_D$ and the intensity in a G band of from 1560 to 1620 cm$^{-1}$ is designated as $I_G$ in a Raman spectrum obtained by Raman spectrometry.

The durability of porous activated carbon black as the carbon material for a catalyst carrier, namely, durability against two types of oxidative consumption during retention at a high potential of more than 1 V, (1) oxidative consumption of an edge portion of porous activated carbon black and (2) local oxidative consumption of a moiety at which a nano-sized catalytic metal is in the state of being carried and such a catalytic metal is contact, is determined.

A solution for enhancing this durability is an enhancement in crystallinity of porous activated carbon black. An enhancement in crystallinity results in both an increase in size of a carbon net sheet and an increase in number of sheets layered, thereby resulting in an enhancement in oxidative consumption resistance of the porous activated carbon black.

In a Raman spectrum of porous activated carbon black, obtained by Raman spectrometry, the information on crystallinity of porous activated carbon black can be obtained from spectra of two peak including peak (peak at from 1300 to 1360 cm$^{-1}$) of a D band reflecting the magnitude of the edge area of a carbon net sheet and a peak (peak at from 1560 to 1620 cm$^{-1}$) of a G band reflecting the size of a carbon net sheet and the number of such sheets layered. In other words, it is generally considered that the area of the peak of the D band and the area of the peak of the G band respectively correspond to the volume of an amorphous region and the volume of a crystalline region contained in a carbon material to be measured. Herein, the area of a peak in a Raman spectrum is described as the intensity. Accordingly, in a case in which the intensity of the D band is designated as $I_D$ and the intensity of the G band is designated as $I_G$, the intensity ratio: $I_D/I_G$ serves as an index reflecting the height of crystallinity.

The intensity ratio $I_D/I_G$ of the D band and the G band of porous activated carbon black obtained by subjecting the activated carbon black obtained by first activation, to heat treatment (also referred to as graphitization treatment) and second activation at from 1400 to 1900°C in an inert atmosphere sensitively reflects the change in crystallinity by heat treatment.

Therefore, in a case in which the intensity ratio $I_D/I_G$ of porous activated carbon black is from 1.20 to 2.20, crystallinity is enhanced and durability is enhanced.

In a case in which the intensity ratio $I_D/I_G$ of porous activated carbon black is less than 1.20, the requirement (C) to the requirement (H) cannot maintained and electricity generation characteristics (in particular, low-load characteristics) decrease.

In a case in which the intensity ratio $I_D/I_G$ of porous activated carbon black is more than 2.20, the degree of crystallinity is so low that no improvement of durability is confirmed.

The intensity ratio $I_D/I_G$ of porous activated carbon black is preferably from 1.20 to 2.10, more preferably from 1.20 to 2.00.

The intensity ratio $I_D/I_G$ is a value measured by a method described in Examples below.

<Methods of Producing Oxygen-Treated Carbon Black, Activated Carbon Black, and Carbon Material (Porous Activated Carbon Black) for Catalyst Carrier of Solid Polymer Fuel Cell>

Hereinafter, one example of the method of producing each of the oxygen-treated carbon black, the activated carbon black, and the carbon material (porous activated carbon black) for a catalyst carrier of a solid polymer fuel cell is described.

The method of producing the carbon material (porous activated carbon black) for a catalyst carrier of the disclosure has the following four steps.

Oxygen treatment step; oxygen treatment step of oxygen-treating raw material carbon black to obtain oxygen-treated carbon black

First activation step: first activation step of applying first activation to the oxygen- treated carbon black to obtain activated carbon black

Heat treatment step; heat treatment step of heat-treating the activated carbon black to obtain heat-treated activated carbon black

Second activation step: second activation step of applying second activation to the heat-treated activated carbon black to obtain porous activated carbon black

The method of producing the carbon material (porous activated carbon black) for a catalyst carrier of the disclosure undergoes the above steps, thereby allowing a carbon material for a catalyst carrier (porous activated carbon black), satisfying the requirements (F) to (I) to be obtained.

The method of producing the activated carbon black of the disclosure has the oxygen treatment step and the first activation step.

The method of producing the activated carbon black of the disclosure undergoes the above step steps, thereby allowing activated carbon black satisfying the requirements (C) to (E) to be obtained.

The method of producing the oxygen-treated carbon black of the disclosure has the oxygen treatment step.

The method of producing the oxygen-treated carbon black of the disclosure undergoes the above step, thereby allowing oxygen-treated carbon black satisfying the requirement (A) (preferably the requirements (A) to (B)) to be obtained.

Hereinafter, the detail of each step is described.

First, the raw material carbon black to be used is described.

(Raw Material Carbon Black)

The raw material carbon black applied here can be suitably carbon black satisfying predetermined two configurations, primary particle size and steric structure (aggregate structure formed by beading primary particles, described later.

-Primary Particle Size-

The size of a void in a catalyst layer to be formed is determined from the steric structure and the primary particle size of the raw material carbon black. In other words, the steric structure is made from primary particles beaded, and therefore, primary particle size $\times$ number of beads = void size, is satisfied.

In a case in which the steric structure is developed and the primary particle size is 20 nm or more, electricity generation characteristics do not decrease due to rate-limiting gas diffusion in the catalyst layer. In other words, a preferred range of the primary particle size is from 20 nm to 80 nm. A primary particle size of more than 80 nm is large to make development of the steric structure difficult, and thus a primary particle size of 80 nm is a substantial limit in terms of production.

Pore formation by the first activation is presumed to allow a pore to be formed from the outside toward the inside, and the vicinity of a surface is continuously exposed to oxidation treatment and the loss due to consumption is large. In a case in which this presumption is made, a larger primary particle size tends to allow a pore smaller in pore size to be formed in the inside and allow a pore relatively large in pore size to be formed in the vicinity of the surface.

In fact, the activation of the raw material carbon black which is large in primary particle size provides weak pore development as compared with the case of a smaller particle size even in a case in which mass reduction progresses. In other words, as the primary particle size is larger, the BET specific surface area is hardly larger.

In this regard, although the mechanism is not necessarily clear, in the case of the same crystallinity based on Raman or X diffraction, the raw material carbon black which is larger in primary particle size is higher in resistance to oxidative consumption than the raw material carbon black which is smaller in primary particle size. In other words, durability serves as an outline as the primary particle size is larger.

In particular, the raw material carbon black, which has a primary particle size of more than 40 nm, produces an effect on improvement of durability. The raw material carbon black, which has a primary particle size of 50 nm or more, produces an effect on a significant improvement in durability, and the raw material carbon black, which has a primary particle size of more than 60 nm, produces a remarkable effect of an improvement in durability.

The primary particle size of the raw material carbon black is one of basic physical properties, and is seen in a primary particle size as a catalog value from a carbon black manufacturer.

Herein, in a case in which a catalog value from a carbon black manufacturer cannot be seen, the arithmetic average value of the primary particle size is calculated through a primary particle image measured with an electron microscope corresponding to a method recommended by CARBON BLACK ASSOCIATION, namely, a method described in the Carbon Black Yearbook. More specifically, "i. Electron microscopic photography", "ii. Measurement of particle size", and "iii. Method of calculating particle size" in page 176 of the Carbon Black Handbook (edited by CARBON BLACK ASSOCIATION, first published in 1971 (S46)) have been seen. In order to obtain the statistical average, the sizes of at least 100 primary particles are measured and the arithmetic average is identified as the primary particle size. The arithmetic average size is here calculated by the following formula.

$$d = \Sigma n_i d_i / \Sigma n_i,$$

, wherein $n_i$ is the number of particle sizes $d_i$.

-Steric Structure-

A structure suited for a catalyst carrier of a fuel cell is preferably porous activated carbon black in which a steric structure is developed. A catalyst layer formed with the steric structure is a void-containing catalyst layer high in porosity, and the diffusion speed of an oxidizing gas increases.

An applicable physical property value reflecting the steric structure is, for example, the amount of DBP oil absorption, the BET specific surface area, or a distribution of the amount of mercury intrusion by a mercury porosimetry method.

The amount of DBP oil absorption is a representative industrial index in colloidal physical properties of carbon black, and is a so-called catalog placing value, and any value placed in a physical property table from a carbon black manufacturer is also used for definitions of physical properties in the disclosure.

A specific numerical value of the amount of DBP oil absorption is preferably 80 mL/100 g or more, more preferably 100 mL/100 g, still more preferably 120 mL/100 g.

In a case in which the specific gravity of the raw material carbon black is approximately 1.8 g/mL and thus the amount of DBP oil absorption is considered to correspond to a void in the catalyst layer, an amount of DBP oil absorption of 80 mL/100 g corresponds to a void of 1.4 times or more the volume of the raw material carbon black. In a case in which the amount of DBP oil absorption is smaller than 80 mL/100 g, development of the steric structure is so small that low-load characteristics decrease. In this regard, the upper limit of the amount of DBP oil absorption is an upper limit of 180 mL/100 g in terms of production principle.

The amount of DBP oil absorption indicates the amount of dibutyl phthalate (DBP) absorbed by 100 g of carbon black, and is a value defined in ASTM (American Standard Test Method) D2414-6TT.

The BET specific surface area is the most basis physical property value of carbon black. The BET specific surface area of the raw material carbon black has an influence on the activation in the first activation treatment step.

A specific BET specific surface area is preferably from 20 to 200 $m^2$/g, more preferably from 25 to 180 $m^2$/g.

The BET specific surface area is a value measured by a method described in Examples below.

Evaluation of the steric structure by a mercury porosimetry method is performed by converting the hydrostatic pressure applied to mercury, to the pore size, on the assumption of a cylinder with the surface tension of mercury to the raw material carbon black, and obtaining a distribution in which the horizontal axis represents the pore size and the vertical axis represents the integrated value of the pore volume of a pore larger in size than the pore size.

The raw material carbon black, which has the steric structure, provides absorption of mercury proportional to the void volume, at a relative pressure of indentation, corresponding to the void size resulting from the steric structure, and thus the steric structure can be quantitatively evaluated from the pore size distribution of the amount of mercury absorption.

Specifically, the increment in amount of mercury absorbed in a pressure rise in which the mercury indentation pressure increases from 10 MPa (corresponding to a pore of about 10 nm) to 100 MPa (corresponding to a pore of about 100 nm) is preferably from 0.5 to 1.5 mL/g in consideration of a suited amount of DBP oil absorption for the void in the catalyst layer. In a case in which the increment in the amount of mercury is smaller than 0.5 mL/g, development of the steric structure is so small that low-load characteristics decrease. In this regard, an increment in amount of mercury of 1.5 mL/g is the upper limit in terms of production principle.

(Oxygen Treatment Step)

The oxygen treatment step is the former stage for the first activation, and is to introduce a micropore to the raw material carbon black by oxygen treatment.

The role of the oxygen treatment step is to obtain oxygen-treated carbon black in which a pore is developed by the first activation. Specifically, the role of the oxygen treatment step is to obtain oxygen-treated carbon black in which a pore leading to the occurrence of surface roughness causing decreases in electricity generation characteristics is not developed, by increasing the BET surface area and the pore volume of a pore, each serving as a factor for enhancements in electricity generation characteristics, by the first activation.

A pore serving as a factor for enhancements in electricity generation characteristics is a pore having a pore size of from 2 nm to less than 6 nm, and a pore leading to the occurrence of surface roughness causing decreases in electricity generation characteristics, which has a pore size of from 6 nm to 10 nm.

In order to exhibit a function of the oxygen treatment, namely, pore development by the first activation, required characteristics of the oxygen-treated carbon black include the content of oxygen (preferably, the content of oxygen and the BET specific surface area). The content of oxygen (preferably, the content of oxygen and the BET specific surface area) can be increased by the oxygen treatment.

Both the oxygen treatment and the first activation have the function of pore formation (namely, pore making). Herein, the oxygen treatment temperature of the oxygen treatment is set to be lower than the activation temperature of the first activation. The oxygen treatment is a low temperature reaction, and thus an oxygen-containing functional group is always present in a raw material carbon black surface during an oxidation reaction. Thus, a large number of such oxygen-containing functional groups are present in a pore surface of the oxygen-treated carbon black. In other words, the content of oxygen in the oxygen-treated carbon black increases with being substantially proportional to the BET specific surface area. Such an oxygen-containing functional group is considered to have the action of promotion of activation in the first activation. The first activation allows such an oxygen-containing functional group to desorb as $CO$ and $CO_2$. Since aromatics are broken during such desorption, the action of allowing the next oxidation reaction to easily occur is provided. Thus, the first activation allows the BET surface area and the pore volume of a pore, each serving as a factor for enhancements in electricity generation characteristics, to increase, thereby providing oxygen-treated carbon black in which a pore generating surface roughness causing decreases in electricity generation characteristics is not developed.

The upper limit of the oxygen treatment temperature is restricted in oxygen treatment conditions capable of controlling the content of oxygen (preferably, the content of oxygen and the BET specific surface area), and is preferably 500°C or less, more preferably 450°C or less.

In a case in which the oxygen treatment temperature is more than 500°C, the oxidation power is so high that surface combustion of the raw material carbon black is remarkable and a pore large in pore size is hardly formed on the surface. As a result, it is difficult to satisfy the requirement (E) and the requirement (H).

Also in a case in which the oxygen concentration is high, a carbon black surface is combusted, thereby not advancing pore formation, whereby the upper limit of the oxygen concentration, depending on the temperature, is present.

Specifically, an optimal range of the oxidation treatment temperature, corresponding to the oxygen concentration, is as follows.

In a case in which the oxygen concentration is more than 50% by volume, the oxygen treatment temperature is preferably from 250°C to 350°C, in a case in which the oxygen concentration is from 25% by volume (comparable with the case of air) to less than 50% by volume, the oxygen treatment temperature is preferably from 300°C to 400°C, in a case in which the oxygen concentration is from 10% by volume to less than 25% by volume, the oxygen treatment temperature is preferably from 350°C to 450°C, and in a case in which the oxygen concentration is less than 10% by volume, the oxygen treatment temperature is preferably from 400°C to 500°C.

The lower limit of the oxygen treatment temperature may be set to a temperature so that the time required for the oxygen treatment is more than 100 hours.

The oxygen treatment of raw material carbon black exclusively depends on the factor of the oxygen treatment temperature from the viewpoint of an increase in content of oxygen. In other words, a tendency in which, as the oxygen treatment temperature is higher, the content of oxygen is reduced even with an increase in BET specific surface area is confirmed. It is presumed that the reason for this is because, as the oxygen treatment temperature is higher, the type of an oxygen-containing functional group which can be stably present is limited and the amount of an oxygen-containing functional group present is restricted. Specifically, in a case in which the oxygen treatment temperature is more than 500°C, the content of oxygen is lowered to 0.5% by mass or less. Therefore, the upper limit of the oxygen treatment temperature is preferably 500°C or less, more preferably 450°C or less.

The oxygen treatment time highly depends on the oxygen concentration and the oxygen treatment temperature, and can be, for example, from 1 to 40 hours as long as the oxygen concentration and the oxygen treatment temperature fall within the above ranges. The upper limit of the oxygen treatment time is, for example, 100 hours. In a case in which the oxygen treatment time is more than 100 hours, the degree of surface combustion of raw material carbon black is higher, thereby making it difficult to realize a pore structure satisfying the requirement (E) and the requirement (H).

The oxygen treatment with ozone can also be applied from the viewpoint of imparting oxygen. However, no pore is formed by the oxygen treatment with ozone, and therefore it is preferable that raw material carbon black oxygen-treated is ozone-treated in an oxidation gas containing ozone under a condition of 100°C or less, after such oxygen treatment.

The oxygen treatment of raw material carbon black with oxygen or ozone as the oxidation gas is an exothermal reaction, and thus a point of concern is suppression of thermal runaway due to storage of reaction heat. For example, a rotary kiln, or a fluidized layer which allows the gas to be forcedly contacted with raw material carbon black can be applied as an apparatus suited for the oxygen treatment. The rotary kiln and the fluidized layer allow a fresh oxidation gas and raw material carbon black to be contacted, and can realize uniform oxygen treatment in a short time.

Herein, the fluidized layer can complete the oxygen treatment in a short time because of a high percentage of gas utilization, but the amount of heat generation per unit time and unit volume is large and thus it is important to design an apparatus allowing for easy removal of heat. For example, the amount of raw material carbon black mounted in the height direction can be restricted by an increase in floor area, thereby allowing the oxidation gas itself to act as a heat removal medium of reaction heat.

The action of the oxygen treatment causes an increase in proportion of surface combustion according to an increase in mass reduction rate, and, for example, porous activated carbon black having a BET specific surface area of more than 500 $m^2/g$ cannot be made. In other words, the pore structure by the oxygen treatment is merely one by former stage treatment, and the finishing treatment of the pore structure is provided by the first activation with water vapor or $CO_2$ after the oxygen treatment.

(First Activation Step)

In the first activation step, the oxygen-treated carbon black is made porous by first activation.

The mechanism for activation of the oxygen-treated carbon black is considered as follows.

The oxygen-treated carbon black is contacted with an activation gas such as water vapor ($H_2O$) or $CO_2$ and kept at from 800°C to 1100°C, whereby a carbon atom constituting the oxygen-treated carbon black is removed in the form of CO. This reaction is made at an optimized reaction speed, whereby a peripheral portion (edge portion) of a fused polycyclic aromatic moiety, to be easily combusted, of a crystallite having a size of several nanometers forming the oxygen-treated carbon black is selectively oxidatively consumed. As a result, a gap occurs between such crystallites, and furthermore consumption of such crystallites is continued toward the inside. Thus, carbon black made porous is formed. This is a process of making carbon black porous by an activation operation.

An increased activation treatment temperature increases the reaction speed, accelerates combustion of a surface vicinity in contact with a high-concentration activation gas, much further lowers the activation gas concentration for diffusion toward the inside, and decreases the rate of combustion of the inside. The reaction speed is moderately controlled in order to develop a pore in the inside without any change of the surface state. Water vapor and $CO_2$ are optimal activation gases from the viewpoint that the reaction speed can be controlled in a wide temperature range.

The reason why the application of activation by oxygen is not industrialized is as follows. The oxidation reaction of the oxygen-treated carbon black by water vapor and $CO_2$ is an endothermic reaction, the reaction does not progress as long as heat is not applied, and easily increases in scale from the viewpoint of being controllable by the amount of heat fed. On the contrary, the oxidation reaction of the oxygen-treated carbon black by oxygen is an exothermal reaction, and the reaction is hardly controlled because the temperature of a reaction site monotonically rises in a case in which the heat generated is more than the heat removed.

This phenomenon is accelerated by an increase in scale, and therefore oxidation by oxygen is not suited for large-scale production and activation with water vapor or $CO_2$ as the activation gas is suited therefor.

As long as a production process allowing the reaction of such activation to progress is realized, the activation apparatus is not restricted. It is preferable for efficient progress of such activation to increase the activation gas concentration on a surface of an oxygen-treated carbon black pellet. For such an increase, a decrease in the thickness of a boundary film of an oxidizing gas, formed near the surface of an oxygen-treated carbon black pellet is preferable, and an increase in relative speed of the activation gas to the oxygen-treated carbon black pellet is effective. A rotary kiln or a fluidized layer generally used for industrial production is preferred because uniformity of the activation gas in a furnace can be enhanced. Such a fluidized layer is an excellent apparatus and is particularly suitable from the viewpoint of the percentage of gas utilization and the reaction speed because the relative speed of the activation gas to the oxygen-treated carbon black pellet can be increased.

A specific condition of first activation, the temperature, is controlled depending on the reaction strength of the activation gas. The activation gas is suitably water vapor or $CO_2$.

In a case in which water vapor is used for the activation gas, a preferred activation treatment temperature is from 750°C to 900°C, and in a case in which $CO_2$ is used for the activation gas, a preferred activation treatment temperature is from 800°C to 950°C.

In order to obtain activated carbon black satisfying the requirement (C) to the requirement (E), the mass reduction rate of the oxygen-treated carbon black due to first activation is, for example, from 50 to 85% by mass, and is preferably from 60 to 80%. The treatment time taken until attainment of such a mass reduction rate is, for example, from 5 to 100 hours, and is preferably from 10 to 80 hours, more preferably from 20 to 80 hours.

An activation condition in which the time taken until the mass reduction rate reaches 50% by mass is less than 5 hours imparts a smaller BET specific surface area, a smaller integrated value $\Sigma_{2-6}$ of the pore volume of a pore having a pore size of from 2 nm to less than 6 nm, or larger ratio $\Sigma_{6-10}/\Sigma_{2-6}$ of the integrated value of the pore volume, when compared with, for example, a case in which the time taken for the mass reduction rate is 20 hours. A too high reaction speed leads to relatively large surface combustion of the oxygen-treated carbon black against inside combustion for inside pore formation to cause consumption of one portion of the mass reduction for surface combustion, thereby not increasing the BET specific surface area. The pore volume of a pore having a pore size of from 6 nm to less than 10 nm is also larger. In other words, it is preferable for suppression of surface combustion that the activation temperature is lowered and the activation time is elongated.

Long-time activation in which the time taken until the mass reduction rate reaches 50% by mass is more than 100 hours is not preferred because a too low reaction speed leads to surface combustion dominant against inside combustion and suppress development of a pore having a pore size of from 2 nm to less than 6 nm.

The activation treatment in which the activation treatment temperature is high and the activation treatment time is long (for example, activation in which the activation treatment temperature is 980°C or more and the activation treatment time is 110 hours or more) does not provide activated carbon black satisfying the requirement (E) and the requirement (H) for the above reasons.

It is also preferable to perform activation in the state of an increased pressure of the activation gas.

The activation gas concentration is high, whereby the rate of the oxidation reaction increases in substantial proportion to the concentration and the activation time can be shortened without any change in pore development, namely, without any changes in BET specific surface area and pore size distribution and also without any change in ratio of surface combustion. The activation time can be shortened in proportion to the pressure as long as the pressurization range is up to several atm.

The effect of a substantial increase in pressure is hardly exerted at a pressure of 6 atm or more, and a pressure of 6 atm or less is preferred. The activation time in the case of activation in a pressurized state is, for example, from 3 to 50 hours, preferably from 5 to 30 hours, more preferably from 5 to 20 hours. The lower limit and the upper limit of the activation time are determined in order to avoid the same phenomenon as that at ordinary pressure

The above first activation step can provide activated carbon black in which a pore having a pore size of from 6 nm to less than 10 nm is developed inside the oxygen-treated carbon black and which satisfies the requirements (C) to (E).

The activated carbon black made porous is changed in tissue structure-crystal structure so as to have a more stable graphite structure in the course of an enhancement in crystallinity in the heat treatment step. Therefore, a pore which can also be said to be a defect is changed so as to collapse. Accordingly, the pore structure of the activated carbon black obtained in the first activation step needs to be made as a structure developed as compared with a finally desired pore structure, in order that a preferred pore structure is kept even after the collapse of a pore in the heat treatment step.

(Heat Treatment Step)

The heat treatment step is to heat-treat the activated carbon black obtained in the first activation step.

A catalyst carrier is exposed to a noble potential of 1 V or more in a running environment of a fuel cell. An ionomer has a sulfonic acid group, and thus a catalyst carrier covered with the ionomer is placed at a noble potential of 1 V or more under a strongly acidic environment. In a case in which porous activated carbon black is applied to such an environment, thermodynamic stability cannot be desired and therefore a general measure is to increase the crystallinity as much as possible to avoid oxidative consumption in terms of rate.

An ordinary method for increasing the crystallinity of porous activated carbon black is heating treatment under an inert gas atmosphere or a reducing atmosphere. In the heat treatment step, for example, a heat treatment step (namely, graphitization treatment step) at from 1400°C to 1900°C for 10 minutes to 10 hours under an inert gas atmosphere at ordinary pressure (namely, 1 atm) is applied to the activated carbon black obtained in the first activation step. A temperature of more than 1900°C leads to remarkable collapse of a pore due to heat treatment, and a temperature of 1900°C or less is actually preferred.

In the heat treatment step, the crystallinity of the activated carbon black can be increased by graphitization of the activated carbon black. More specifically, the activated carbon black, to which first activation is applied in the above strong activation condition, is heat-treated in the above conditions, whereby not only a pore can be kept without collapsing, but also the crystallinity of the activated carbon black. Thus, porous activated carbon black can be produced which satisfies not only the requirements (F) to (H), but also the requirement (I).

The heat treatment step is not particularly restricted as long as it is a step capable of heating the activated carbon black in the above conditions. Examples of the heating method include resistance heating, microwave heating, high-frequency heating, and a heating method with a furnace system. The furnace system is a graphitization furnace, a batch-type furnace, a tunnel furnace, or the like, and is not restricted as long as ordinary pressure and an inert gas atmosphere can be achieved.

(Second Activation Step)

The second activation step is to subject the heat-treated activated carbon black heat-treated, to second activation. The activation gas is suitably water vapor or $CO_2$.

The second activation allows for the formation of a tissue structure in which crystallites made finer or burned down by oxidative consumption in the first activation are contacted with each other by thermal fluctuation and chemically bound at contact points, and thus these crystallites are connected.

During the second activation, the primary particle size is generally shrunk and the shape is also changed from a spherical shape to an indefinite shape. Such deformation results in a decrease in the gap between crystallites and decreases in pore volume and BET specific surface area.

The second activation is treatment for enlarging a decreased void or again opening a pore clogged. The heat-treated activated carbon black, when directly used as a catalyst carrier without any application of the second activation, is remarkably inferior in electricity generation characteristics (in particular, low-load characteristics) as compared with porous activated carbon black after the second activation. It is presumed that the reason for this is because the pore size is decreased, thereby hardly allowing for penetration of an ionomer into a pore, resulting in a decrease in rate of catalyst utilization and a decrease in electricity generation characteristics.

Objects of the second activation are void enlargement and re-opening of a clogged pore, and therefore combustion of carbon in the second activation is desirably made to the minimum necessary.

The mass reduction rate by the second activation is preferably from 1 to 15% by mass, more preferably from 3 to 12% by mass from this viewpoint. The activation temperature and the activation time suited for the second activation are respectively preferably from 800°C to 950°C and several hours (for example, from 1 hour to 5 hours).

More specifically, in a case in which the heat treatment temperature is from more than 1800°C to 1900°C and the activation temperature of the second activation is from more than 900°C to 950°C, the activation time is preferably from 1.5 hours to 5.0 hours.

In a case in which the heat treatment temperature is high, crystallinity increases and progress of activation in the second activation is slower. Therefore, the activation temperature of the second activation tends to be higher, but an activation temperature of the second activation of from more than 900°C to 950°C easily causes oxidative consumption of a carbon surface. Therefore, the activation time is longer, whereby the proportion of oxidative consumption of the surface is lower even if only slightly.

Accordingly, the minimum activation time is preferably from 1.5 hours to 5.0 hours.

In this regard, in which the heat treatment temperature is 1800°C or less, the above consideration is not required.

<Catalyst Layer for Solid Polymer Fuel Cell and Solid Polymer Fuel Cell>

A solid polymer fuel cell is described together with the catalyst layer for a solid polymer fuel cell of the disclosure.

The carbon material of the disclosure can be applied to, for example, catalyst layers 150 and 160 provided in a solid polymer fuel cell 100 illustrated in FIG. 1. FIG. 1 is a schematic view illustrating one example of an outline configuration of the fuel cell of the disclosure.

The solid polymer fuel cell 100 illustrated in FIG. 1 includes separators 110 and 120, gas diffusion layers 130 and 140, catalyst layers 150 and 160, and an electrolyte membrane 170.

The separator 110 is a separator on the anode side, and introduces a reducing gas such as hydrogen to the gas diffusion layer 130. The separator 120 is a separator on the cathode side, and introduces an oxidizing gas such as an oxygen gas or air to a gas diffusion aggregation phase. The separators 110 and 120 are not particularly limited in terms of type as long as these are each a separator used for a conventional fuel cell (for example, solid polymer fuel cell).

The gas diffusion layer 130 is a gas diffusion layer on the anode side, and diffuses the reducing gas supplied from the separator 110 and then supplies the reducing gas to the catalyst layer 150. The gas diffusion layer 140 is a gas diffusion layer on the cathode side, and diffuses the oxidizing gas supplied from the separator 120 and then supplies the oxidizing gas to the catalyst layer 160. The gas diffusion layers 130 and 140 are not particularly limited in terms of type as long as these are each a gas diffusion layer used for a conventional fuel cell (for example, solid polymer fuel cell). Examples of the gas diffusion layers 130 and 140 include porous carbon materials (carbon cloth, carbon paper, and the like) and porous metal materials (metal mesh, metal wool, and the like). Preferred examples of the gas diffusion layers 130 and 140 include a gas diffusion layer of a two-layered structure. Specific examples include a gas diffusion layer of a two-layered structure in which a layer located on each of the separators 110 and 120 sides is a gas-diffusive fiber layer with a fibrous carbon material as a main component and a layer located on each of the catalyst layers 150 and 160 sides is a microporous layer with carbon black as a main component, in each of the gas diffusion layers 130 and 140.

The catalyst layer 150 is a so-called anode. An oxidation reaction of a reducing gas occurs to generate a proton and an electron in the catalyst layer 150. For example, in a case in which the reducing gas is a hydrogen gas, the following oxidation reaction occurs.

$$H_2 \rightarrow 2H^+ + 2e^- \ (E_0 = 0 \text{ V})$$

Protons generated by the oxidation reaction pass through the catalyst layer 150 and the electrolyte membrane 170, and reach the catalyst layer 160. Electrons generated by the oxidation reaction pass through the catalyst layer 150, the gas diffusion layer 130, and the separator 110, and reach an external circuit. The electrons work (generate electricity) in the external circuit, and then are introduced to the separator 120. Thereafter, the electrons pass through the separator 120 and the gas diffusion layer 140, and reach the catalyst layer 160.

The configuration of the catalyst layer 150 serving as the anode is not particularly restricted. The configuration of the catalyst layer 150 may be the same as that of a conventional anode, may be the same as that of the catalyst layer 160, or may be a configuration higher in affinity than that of the catalyst layer 160.

The catalyst layer 160 is a so-called cathode. A reduction reaction of an oxidizing gas occurs to generate water in the catalyst layer 160. For example, in a case in which the oxidizing gas is an oxygen gas or air, the following reduction reaction occurs. Water generated in the oxidation reaction is discharged to the outside of the solid polymer fuel cell 100, together with the unreacted oxidizing gas.

$$O_2 + 4H^+ + 4e^- \rightarrow 2H_2O \ (E_0 = 1.23 \text{ V})$$

Thus, the solid polymer fuel cell 100 generates electricity by use of the difference in energy (difference in potential) between the oxidation reaction and the reduction reaction. In other words, the electrons generated in the oxidation reaction work in the external circuit.

The catalyst layer 160 includes the carbon material for a catalyst carrier of the disclosure. In other words, the catalyst layer 160 includes the carbon material for a catalyst carrier of the disclosure, an electrolyte material (ionomer), and a catalyst component (platinum or the like). Thus, the catalyst layer 160 can be enhanced in electricity generation characteristics (in particular, low-load characteristics) and durability. The solid polymer fuel cell 100 can be then enhanced in electricity generation characteristics (in particular, low-load characteristics) and durability.

The catalyst carrying rate in the catalyst layer 160 is not particularly restricted, and is preferably from 30% by mass to less than 80% by mass. In a case in which the catalyst carrying rate is in this range, electricity generation characteristics (in particular, low-load characteristics) and durability are further enhanced. The catalyst carrying rate is here represented by the percentage by mass of a catalyst component with respect to the total mass of a catalyst-carrying particle (particle in which the catalyst component is carried on the carbon material for a catalyst carrier). In a case in which the catalyst carrying rate is less than 30% by mass, a need for thickening the catalyst layer 160 can occur so that the solid polymer fuel cell 100 can withstand practical use. In this regard, in a case in which the catalyst carrying rate is 80% by mass or more, catalyst aggregation easily occurs. The catalyst layer 160, which is too thin, can give rise to the possibility of flooding.

The mass ratio I/C between the mass I of the electrolyte material and the mass C of the carbon material for a catalyst carrier in the catalyst layer 160 is not particularly restricted, and is preferably from more than 0.5 to less than 5.0. In this case, both a pore network and an electrolyte material network can be achieved, and electricity generation characteristics (in particular, low-load characteristics) and durability are enhanced. In this regard, in a case in which the mass ratio I/C is 0.5 or less, the electrolyte material network is weak to result in a tendency to enhance proton conduction resistance. In a case in which the mass ratio I/C is 5.0 or more, the pore network can be divided by the electrolyte material. In each case, electricity generation characteristics (in particular, low-load characteristics) and durability can decrease.

The thickness of the catalyst layer 160 is not particularly restricted, and is preferably from more than 5 $\mu$m to less than 20 $\mu$m. In this case, the oxidizing gas easily diffuses and flooding hardly occurs in the catalyst layer 160. In a case in which the thickness of the catalyst layer 160 is 5 $\mu$m or less, flooding easily occurs. In a case in which the thickness of the catalyst layer 160 is 20 $\mu$m or more, the oxidizing gas hardly diffuses in the catalyst layer 160, and the catalyst component near the electrolyte membrane 170 hardly moves. In other words, the rate of catalyst utilization can decrease.

The electrolyte membrane 170 is constituted from an electrolyte material having proton conductivity. The electrolyte membrane 170 allows protons generated in the oxidation reaction to be introduced to the catalyst layer 160 (cathode). The electrolyte material is not particularly limited in terms of type as long as it is an electrolyte material used for conventional fuel batteries, for example, solid polymer fuel batteries. Suitable examples of the electrolyte material include an electrolytic resin. Examples of the electrolytic resin include a polymer into which a phosphoric acid group, a sulfonic acid group, or the like is introduced. Specific examples include a perfluorosulfonic acid polymer, and a polymer into which benzenesulfonic acid or the like is introduced. Of course, the electrolyte material may also be any other electrolyte material. Examples of such an electrolyte material include inorganic, and inorganic-organic hybrid electrolyte materials. The solid polymer fuel cell 100 may also be a fuel cell to be operated in a range of from ordinary temperature (25°C) to 150°C.

<Method of Producing Solid Polymer Fuel Cell>

The method of producing the solid polymer fuel cell 100 is not particularly restricted as long as it is the same production method as a conventional one. However, the carbon material for a catalyst carrier of the disclosure is used for the catalyst carrier. The carbon material for a catalyst carrier of the disclosure is preferably used for the catalyst carrier at least in the catalyst layer 160 serving as a cathode, of the catalyst layers 150 and 160. Of course, the carbon material for a catalyst carrier of the disclosure may also be used in each of both the catalyst layers including the catalyst layer 150 serving as an anode and the catalyst layer 160 serving as a cathode.

Examples

Examples of the carbon material for a catalyst carrier of the disclosure are described. First, the method of measuring each parameter is described.

<Method of Measuring each Parameter>

(Measurement of Content of Oxygen)

Several mg of a specimen was weighed and taken, and subjected to elemental analysis with an elemental analyzer (fully automatic organic trace elemental analyzer "PerkinElmer 2400 II CHNS/O" (Inmedium)). The percentage by mass of each of C, H, and N in the specimen was analyzed, and the delta between the total percentage of by mass of C, H, and N, and 100% was calculated as the percentage by mass of O, and defined as the content of oxygen (% by mass).

(Measurement of Nitrogen Adsorption/Desorption Isotherm (BET Specific Surface Area))

About 30 mg of a specimen was weighed and taken, and dried in vacuum at 120°C for 2 hours. Next, the specimen was set on an automatic specific surface area measurement apparatus (BELSORP MAX manufactured by MicrotracBEL Corp.), and a nitrogen gas was used as an adsorbate to measure a nitrogen adsorption/desorption isotherm at a measurement temperature of the liquid nitrogen temperature (about 77K).

The BET specific surface area was calculated by BET analysis in a range of relative pressure $P/P_0$ of from 0.05 to 0.15 in the nitrogen adsorption isotherm. The BET value was calculated with calculation software attached to the apparatus.

(Primary Particle Size)

The primary particle size of oxidation-treated carbon black was measured as follows.

"i. Electron microscopic photography", "ii. Measurement of particle size", and "iii. Method of calculating particle size" in page 176 of the Carbon Black Handbook (edited by CARBON BLACK ASSOCIATION, first published in 1971 (S46)) were seen. In order to obtain the statistical average, the sizes of at least 100 primary particles were measured, and the arithmetic average was identified as the primary particle size D. The arithmetic average size is here calculated by the following formula.

$$D = \Sigma n_i d_i / \Sigma n_i,$$

wherein $n_i$ is the number of particle sizes $d_i$.

(Pore Size Distribution of Mesopore)

The pore size distribution of a mesopore was analyzed by a BJH method. The pore size distribution of a mesopore was calculated with calculation software of a HK method, attached to the apparatus, and the integrated values $\Sigma d_{<2}$, $\Sigma d_{<6}$, and $\Sigma d_{<10}$ of the volumes of pores respectively having pore sizes (diameters) of 2 nm or less, 6 nm or less, and 10 nm or less were calculated (see FIG. 1). The $\Sigma d_{<6}$ - $\Sigma d_{<2}$ was then calculated, and adopted as the integrated value $\Sigma_{2-6}$ of the pore volume of a pore having a pore size of from 2 nm to less than 6 nm (see FIG. 2). Furthermore, $\Sigma d_{<10}$ - $\Sigma d_{<6}$ was calculated, the value was divided by $\Sigma d_{<6\,nm}$-$\Sigma d_{<2\,nm}$, and the resulting value was adopted as the ratio $\Sigma_{6-10}/\Sigma_{2-6}$ between the integrated value $\Sigma_{2-6}$ of the pore volume of a pore having a pore size of from 2 nm to less than 6 nm and the integrated value $\Sigma_{6-10}$ of the pore volume of a pore having a pore size of from 6 nm to less than 10 nm (see FIG. 2).

(Measurement of Intensity Ratio $I_D/I_G$ by Raman Spectrometric Method)

About 3 mg of the specimen was weighed and taken, and a Raman spectroscopic spectrum was measured with a laser Raman spectrometer (NRS-3100 Model manufactured by JASCO Corporation). A peak in a range of from 1300 to 1360 cm$^{-1}$, called D band, and a peak in a range of from 1560 to 1620 cm$^{-1}$, called G band, were extracted from the Raman spectroscopic spectrum obtained in following measurement conditions, the intensities of these two peaks were analyzed with spectrum analysis software attached to the apparatus, and the intensity $I_D$ of the D band and the intensity $I_G$ of the G band were calculated. The areas of these Raman peaks reflect the amounts of the carbon materials, belonging to the respective bands, and thus the areas of the respective peaks (the respective bands) in peak separation with the analysis software are adopted as the intensities. The intensity ratio $I_D/I_G$ was calculated from these values.

-Measurement Conditions-

Excitation laser: 532 nm, laser power: 10 mW (irradiation power of specimen: 1.1 mW), microscope location: Backscattering, objective lens: magnification of $\times$100, spot diameter: 1 $\mu$m, exposure time: 30 sec, observation wavenumber: from 2000 cm$^{-1}$ to 300 cm$^{-1}$, cumulated number: 6.

<Experiment Examples>

(Raw Material Carbon Black)

The raw material carbon black prepared here was NITERON #200, NITERON #4500, or NITERON #SH manufactured by NIPPON STEEL Carbon Co., Ltd., or TOKABLACK #4500, GFY Tokai Carbon Co., Ltd., and such each raw material carbon black was subjected to a first activation step, a heat treatment step, and a second activation step described later.

In this regard, the raw material carbon black prepared here was Ketjen black EC300J, EC600JD, or EC200L manufactured by Lion Corporation, or Printex XE2B manufactured by Orion Engineered Carbons. Such carbon black was used as the carbon material for a catalyst carrier, and subjected to evaluation described later (Reference Examples 1-1 to 1-4)

Table 1 below shows the values of the primary particle size (arithmetic average particle size), the amount of DBP oil absorption, and the BET specific surface area of the raw material carbon black, each cited from the website of products of Ketjen black, put on Carbon Black Yearbook No.72 (2022) edited by CARBON BLACK ASSOCIATION.

[Table 1]

Table 1

| Trade name | #200 | #4500 | #SH | GFY | EC300J | EC600JD | EC200L | XE2B |
|---|---|---|---|---|---|---|---|---|
| Primary particle size (nm) | 29 | 40 | 61 | 72 | 39.5 | 34.0 | 40 | 30 |

(continued)

| Trade name | #200 | #4500 | #SH | GFY | EC300J | EC600JD | EC200L | XE2B |
|---|---|---|---|---|---|---|---|---|
| Amount of DBP oil absorption (mL/100 g) | 101 | 168 | 140 | 152 | 360 (15-g method) | 495 (9-g method) | No data | 420 |
| BET specific surface area (m²/g) | 75 | 58 | 25 | 32 | 800 | 1270 | 135* | 1000 |
| * measured value | | | | | | | | |

<Oxygen Treatment Step>

The reaction tube used here was a tube in which a quartz filter (a pore size of from 40 to 50 $\mu$m) was fused as a dispersing plate in a quartz tube having an outer diameter of 50 mm$\varphi$. Quartz wool was charged at a height of about 1 cm therein, and the raw material carbon black in a granulated state was placed thereon. The amount of loading was set to from about 20 to 25 g, and dry air, or dry air mixed with an argon gas was allowed to flow from the lower portion toward the upper portion of the reaction tube as the oxidation gas, in a range of linear speed of from 1.0 to 3.0 cm/sec. The oxygen treatment temperature was carefully selected so that ignition did not occur due to heat storage by the exothermal reaction. Since the combustion speed differed depending on the type of the raw material carbon black, conditions were carefully selected with respect to each raw material carbon black.

Specifically, each raw material carbon black shown in Table 1 was oxygen-treated at each oxygen treatment oxygen concentration, oxygen treatment temperature, and mass reduction rate shown in Table 1.

Herein, in the case of #200 to be easily combusted, the raw material carbon black was oxygen-treated with the linear speed of a mixed oxidation gas of oxygen and an argon gas being controlled to from 0.5 to 1.0 cm/sec in order to allow the oxygen concentration to be as shown in Table 1, for the purpose of suppression of ignition with a decreased amount of heat generation.

In the case of #SH and GFY each exhibiting a low combustion speed having a large particle size, such each raw material carbon black was oxygen-treated with flowing of a mixed oxidation gas of oxygen and an argon gas at a linear speed of from 1.0 to 2.0 cm/sec in order to allow the oxygen concentration to be as shown in Table 1.

In the case of #4500, the combustion speed here corresponded to a middle combustion speed between those in both the above cases, and therefore the raw material carbon black was oxygen-treated with flowing of a mixed oxidation gas of oxygen and an argon gas at a linear speed of from 0.7 to 1.5 cm/sec in order to allow the oxygen concentration to be as shown in Table 1.

The primary particle size D of the resulting oxygen-treated carbon black was comparable with the primary particle size of the raw material carbon black.

EC300J, EC600JD, and XE2B were here each carbon black already subjected to pore-making treatment, and the index of each pore structure was listed as Reference Example and compared with Experiment Examples after first activation.

EC200L was slightly activated to have a low BET surface area, this BET surface area was similar to the BET surface area of the oxygen-treated carbon black of the disclosure, and the index of a pore structure was listed as Reference Example and compared with Experiment Examples after oxygen treatment.

<First Activation Step>

The reaction tube used here was a tube in which a quartz filter was fused as a dispersing plate in a quartz tube having an outer diameter of 35 mm$\varphi$, quartz wool was placed at a height of about 1 cm on the dispersing plate, from 5 g to 15 g of oxygen-treated carbon black was placed thereon, and the reaction tube was set in a vertical electric furnace to be ordinally used at 1100°C. An argon gas was allowed to flow from bottom to top of the reaction tube before heating, thereby purging the inside of the reaction tube with the argon gas, then a temperature rise at 10°C/min was started to perform heating from 850 to 950°C, thereby allowing the temperature to reach a predetermined temperature, and then switching to a $CO_2$ gas was made. The flow rate was adjusted so that a linear speed was from 1 to 2 cm/sec in the state of the temperature in the furnace. After treatment for a predetermined time, the reaction tube was taken out from the furnace, and switching to an argon gas was simultaneously made to perform natural cooling. After cooling to approximately ordinary temperature (25°C) was confirmed, carbon black was taken out and the mass thereof was measured, thereby calculating the mass reduction rate of the yield with respect to the mass loaded (Mass loaded/Mass recovered). Conditions of first activation (the activation temperature and the activation time shown in Table 2) were adjusted so that the mass reduction rate was in a range of from 55 to 80% by mass.

<Heat Treatment Step>

A so-called heat treatment furnace with a graphite material as a heating element was used. The activated carbon black subjected to first activation was placed in a crucible having a volume of about 100 cc, subjected to purging with an argon gas by decompression and vacuum, then heated at 10°C/min with argon at a flow speed enabling the volume in the furnace to be purged in several ten minutes, retained at a predetermined temperature for a certain time and then naturally cooled to approximately room temperature, and then taken out. The retention time at the treatment temperature was variable. Such conditions were shown in Table 2.

<Second Activation Step>

A basic treatment step was the same as in the first activation, and the activation time was set to from 1 to 5 hours, and the mass reduction rate was decreased. Hereinafter, a specific treatment step is shown.
The reaction tube used here was a tube in which a quartz filter was fused as a dispersing plate in a quartz tube having an outer diameter of 35 mm$\varphi$, quartz wool was placed at a height of about 1 cm on the dispersing plate, from 2 g to 5 g of heat-treated activated carbon black subjected to heat treatment was placed thereon, and the reaction tube was set in a vertical electric furnace to be ordinally used at 1100°C. An argon gas was allowed to flow from bottom to top of the reaction tube before heating, thereby purging the inside of the reaction tube with the argon gas, then a temperature rise at 10°C/min was started to perform heating from 820 to 950°C, thereby allowing the temperature to reach a predetermined temperature, and then switching to a $CO_2$ gas was made. The flow rate was adjusted so that a linear speed was from 1 to 2 cm/sec in the state of the temperature in the furnace. After treatment for a predetermined time, the reaction tube was taken out from the furnace, and switching to an argon gas was simultaneously made to perform natural cooling. After cooling to approximately room temperature was confirmed, carbon black was taken out and the mass thereof was measured, thereby calculating the mass reduction rate of the yield with respect to the mass loaded (Mass loaded/Mass recovered). Conditions of the second activation treatment (the activation temperature and the activation time shown in Table 2) were adjusted so that the mass reduction rate was in a range of from 3 to 20% by mass.
The carbon material for a catalyst carrier (porous activated carbon black) of each example was obtained through the above steps.

<Production of Membrane Electrode Assembly (MEA)>

(Production of Catalyst)

The carbon material for a catalyst carrier (porous activated carbon black) of each Example was added to an ethanol/water mixed solvent, treated with an ultrasonic homogenizer for 2 minutes, and thus dispersed in the solvent. A predetermined amount of a nitric acid solution of a dinitrodiammine platinum complex was added thereto, thereby adjusting the platinum carrying rate to 40% by mass, kept at a temperature lower by several degrees than the boiling point, and stirred in an oil bath for 15 hours.
After such treatment, the resultant was filtrated, dispersed again in distilled water, re-filtrated, and treated by drying in vacuum at 90°C for 5 hours, thereby providing a catalyst.

(Production of Ink)

An ionomer solution manufactured by FUJIFILM Wako Pure Chemical Corporation was diluted with ethanol to adjust the solid content concentration to 10% by mass, then dropped into an ethanol solution in which the catalyst was dispersed in advance, furthermore dispersed with an ultrasonic homogenizer, and stirred with 1-mm$\varphi$ glass beads for from 10 to 15 hours. Thus, ink for catalyst layer formation was obtained.

<Production of MEA>

The ink was uniformly applied onto a Teflon (registered trademark) sheet with an atomizer, and dried with an air flow dryer at 60°C, to prepare a decal in which a catalyst layer was formed. An electrode having a predetermined size of 36 mm was cut out from the decal. Such two sheets cut out, which were the same, were respectively adopted as a positive electrode and a negative electrode, the positive electrode and the negative electrode were allowed to face both respective surfaces of a Nafion membrane, and thermally fused. Thus, MEA was obtained.

<Cell Evaluation>

(Evaluation of Electricity Generation Characteristics (Low-Load Characteristics))

The MEA produced with the carbon material for a catalyst carrier (porous activated carbon black) of each Example was incorporated into a cell, and set in a fuel cell measurement apparatus, and performance evaluation of the fuel cell was performed by the following procedure.

The oxidizing gases, air and as pure hydrogen, were fed respectively to the cathode and the anode at a back pressure of 0.04 MPa adjusted with a back pressure valve provided downstream of the cell so that the respective rates of utilization were 40% and 70%. The cell temperature was set to 80°C, the respective oxidizing gases to be fed to the cathode and the anode were bubbled in distilled water warmed at 80°C in a humidifier, thus the gases humidified at 80°C were fed to the cell at 80°C, and electricity generation evaluation was performed.

The load was gradually increased under a condition in which the oxidizing gases were fed to the cell under such a setting, and the output voltage of the cell after retention at a current density of 100 mA/cm$^2$ for 1 hour was measured, and evaluated according to the following pass rank and fail rank criteria. The results are shown in Table 2.

[Pass Rank]

A: One in which the cell voltage after a lapse of 1 hour at a current density of 100 mA/cm$^2$ is 0.875 V or more.
B: One in which the cell voltage after a lapse of 1 hour at a current density of 100 mA/cm$^2$ is 0.872 V or more.
C: One in which the cell voltage after a lapse of 1 hour at a current density of 100 mA/cm$^2$ is 0.870 V or more.

[Fail Rank]

D: One in which the cell voltage after a lapse of 1 hour at a current density of 100 mA/cm$^2$ is less than 0.870 V.

(Evaluation of Durability)

A cycle in which, while the anode was used as it was and an argon gas in the same wetting conditions as above was allowed to flow in the cathode in the cell, an operation of retention at a cell voltage of 1.0 V for 4 seconds and an operation of retention at a cell voltage of 1.3 V for 4 seconds were repeated (repetition operation of the variation in voltage in a rectangular wave manner) was defined as one cycle, this repetition operation of the variation in voltage in a rectangular wave manner was carried out for 4000 cycles, and thereafter durability was examined in the same manner as in the above evaluation of electricity generation characteristics. Evaluation was performed according to the following pass rank and fail rank criteria. The results are shown in Table 2.

[Pass Rank]

A: One in which the cell voltage after a lapse of 1 hour at a current density of 100 mA/cm$^2$ is 0.820 V or more.

B: One in which the cell voltage after a lapse of 1 hour at a current density of 100 mA/cm$^2$ is 0.815 or more.

C: One in which the cell voltage after a lapse of 1 hour at a current density of 100 mA/cm$^2$ is 0.810 V or more.

[Fail Rank]

D: One in which the cell voltage after a lapse of 1 hour at a current density of 100 mA/cm$^2$ is less than 0.810 V.

[Table 2]

| Table 2-1 | | | | | | | | | | | | |
|---|---|---|---|---|---|---|---|---|---|---|---|---|
| Experiment No. | Raw material carbon black | | Synthesis conditions | | | | | | | | | |
| | Type | Primary particle size | Oxygen treatment step | | | | | | First activation step | | | |
| | | $\mu$m | Oxygen concentration (% by volume) /Oxidation treatment temperature (°C) /mass reduction rate (%) | Content of oxygen (%) | $S_{BET}$ /100 | BET ($S_{BET}$) ($m^2$/g) | 5500 /D | Activation gas type /Activation temperature (°C) /hour (hour) | BET ($m^2$/g) | $\Sigma_{2-6}$ | $\Sigma_{6-1}/\Sigma_{2-6}$ |
| Reference Example -1 | XE2B | 0.030 | | 0.2 | 10 | | | | 1000 | 0.34 | 0.525 |
| Reference Example -2 | EC300J | 0.040 | | 0.1 | 8 | | | | 800 | 0.21 | 0.382 |
| Reference Example -3 | EC600JD | 0.034 | | 0.3 | 12.7 | | | | 1270 | 0.56 | 0.498 |
| Reference Example -4 | EC200L | 0.040 | | 0.23 | 1.35 | 135 | 138 | | | | |
| GFY-1 | GFY | 0.072 | None | < 0.1 | 0.29 | 29 | 76.4 | CO2/850/30 | 780 | 0.22 | 0.496 |
| GFY-2 | GFY | 0.072 | 21/400/2.3 | 0.29 | 0.37 | 37 | 76.4 | CO2/850/30 | 825 | 0.22 | 0.492 |
| GFY-3 | GFY | 0.072 | 21/400/4.3 | 1.43 | 1.15 | 115 | 76.4 | CO2/850/30 | 835 | 0.24 | 0.453 |
| GFY-3 A | GFY | 0.072 | 21/400/4.3 | 1.43 | 1.15 | 115 | 76.4 | CO2/850/30 | 835 | 0.24 | 0.453 |
| GFY-3B | GFY | 0.072 | 21/400/4.3 | 1.43 | 1.15 | 115 | 76.4 | CO2/850/30 | 835 | 0.24 | 0.453 |
| GFY-4 | GFY | 0.072 | 21/400/9.8 | 2.03 | 1.55 | 155 | 76.4 | CO2/850/30 | 840 | 0.26 | 0.412 |
| GFY-5 | GFY | 0.072 | 21/400/15.5 | 2.89 | 2.35 | 235 | 76.4 | CO2/850/30 | 845 | 0.29 | 0.374 |
| GFY-6 | GFY | 0.072 | 21/400/21.3 | *3.55* | 2.90 | 290 | 76.4 | CO2/850/30 | 855 | 0.32 | 0.327 |
| GFY-7 | GFY | 0.072 | 7/450/10.1 | 1.21 | 1.12 | 112 | 76.4 | CO2/850/30 | 755 | 0.28 | 0.455 |
| GFY-8 | GFY | 0.072 | 7/500/10.2 | 0.92 | 0.91 | 91 | 76.4 | CO2/850/30 | 720 | 0.26 | 0.487 |
| GFY-9 | GFY | 0.072 | 7/550/9.9 | 0.70 | 0.72 | 72 | 76.4 | CO2/850/30 | 685 | 0.21 | 0.511 |
| GFY-10 | GFY | 0.072 | 21/400/9.6 | 1.40 | 1.33 | 133 | 76.4 | CO2/850/30 | 770 | 0.25 | 0.478 |

| Experiment No. | Raw material carbon black | | Synthesis conditions | | | | | | | | |
|---|---|---|---|---|---|---|---|---|---|---|---|
| | Type | Primary particle size | Oxygen treatment step | | | | | First activation step | | | |
| GFY-11 | GFY | 0.072 | 21/450/8.5 | 0.99 | 0.98 | 98 | 76.4 | CO2/850/30 | 735 | 0.24 | 0.488 |
| GFY-12 | GFY | 0.072 | 21/500/9.3 | 0.89 | 0.92 | 92 | 76.4 | CO2/850/30 | 705 | 0.22 | 0.502 |
| GFY-13 | GFY | 0.072 | 40/330/9.7 | 2.23 | 1.65 | 165 | 76.4 | CO2/850/30 | 865 | 0.27 | 0.412 |
| GFY-14 | GFY | 0.072 | 55/310/9.3 | 2.26 | 1.70 | 170 | 76.4 | CO2/850/30 | 875 | 0.28 | 0.337 |
| GFY-15 | GFY | 0.072 | 70/280/9.8 | 2.30 | 1.70 | 170 | 76.4 | CO2/850/30 | 880 | 0.29 | 0.285 |
| GFY-13 | GFY | 0.072 | 21/400/11.3 | 1.98 | 1.85 | 185 | 76.4 | CO2/850/25 | 705 | 0.22 | 0.295 |
| GFY-14 | GFY | 0.072 | 21/400/11.3 | 1.98 | 1.85 | 185 | 76.4 | CO2/850/30 | 785 | 0.24 | 0.280 |
| GFY-15 | GFY | 0.072 | 21/400/11.3 | 1.98 | 1.85 | 185 | 76.4 | CO2/850/35 | 825 | 0.29 | 0.320 |
| GFY-16 | GFY | 0.072 | 21/400/11.3 | 1.98 | 1.85 | 185 | 76.4 | CO2/850/35 | 825 | 0.29 | 0.320 |
| GFY-17 | GFY | 0.072 | 21/400/11.3 | 1.98 | 1.85 | 185 | 76.4 | CO2/850/35 | 825 | 0.29 | 0.320 |
| GFY-18 | GFY | 0.072 | 21/400/11.3 | 1.98 | 1.85 | 185 | 76.4 | CO2/850/60 | 885 | 0.31 | 0.355 |
| GFY-19 | GFY | 0.072 | 21/400/11.3 | 1.98 | 1.85 | 185 | 76.4 | CO2/850/85 | 945 | 0.38 | 0.415 |
| GFY-20 | GFY | 0.072 | 21/400/11.3 | 1.98 | 1.85 | 185 | 76.4 | CO2/850/110 | 920 | 0.32 | 0.495 |

Table 2-1

[Table 3]

| Table 2-2 | | | | | | | | | | | | |
|---|---|---|---|---|---|---|---|---|---|---|---|---|
| Experiment No. | | Raw material carbon black | | Synthesis conditions | | | | | | First activation step | | |
| | | Type | Primary particle size | Oxygen treatment step | | | | | | First activation step | | |
| | | | $\mu m$ | Oxygen concentration (% by volume)/Oxidation treatment temperature (°C) /mass reduction rate (%) | Content of oxygen (%) | $S_{BET}$ /100 | BET ($S_{BET}$) ($m^2$/g) | 5500 /D temperature (°C) /hour (hour) | Activation gas type /Activation | BET ($m^2$/g) | $\Sigma_{2-6}$ |
| GFY-21 | GFY | 0.072 | 21/410/16.7 | 2.65 | 2.25 | 225 | 76.4 | CO2/850/55 | 925 | 0.39 | 0.435 |
| GFY-22 | GFY | 0.072 | 21/410/16.7 | 2.65 | 2.25 | 225 | 76.4 | CO2/850/55 | 925 | 0.39 | 0.435 |
| GFY-23 | GFY | 0.072 | 21/410/16.7 | 2.65 | 2.25 | 225 | 76.4 | CO2/850/55 | 925 | 0.39 | 0.435 |
| GFY-24 | GFY | 0.072 | 21/410/16.7 | 2.65 | 2.25 | 225 | 76.4 | CO2/850/55 | 925 | 0.39 | 0.435 |
| GFY-25 | GFY | 0.072 | 21/410/16.7 | 2.65 | 2.25 | 225 | 76.4 | CO2/850/55 | 925 | 0.39 | 0.435 |
| GFY-26 | GFY | 0.072 | 21/410/16.7 | 2.65 | 2.25 | 225 | 76.4 | CO2/850/55 | 925 | 0.39 | 0.435 |
| GFY-27 | GFY | 0.072 | 21/410/16.7 | 2.65 | 2.25 | 225 | 76.4 | CO2/850/55 | 925 | 0.39 | 0.435 |
| GFY-28 | GFY | 0.072 | 21/410/16.7 | 2.65 | 2.25 | 225 | 76.4 | CO2/850/55 | 925 | 0.39 | 0.435 |
| GFY-28 A | GFY | 0.072 | 21/410/16.7 | 2.65 | 2.25 | 225 | 76.4 | CO2/850/55 | 925 | 0.39 | 0.435 |
| GFY-29 | GFY | 0.072 | 40/315/19.5 | 3.35 | 2.75 | 275 | 76.4 | CO2/870/45 | 940 | 0.47 | 0.415 |
| GFY-30 | GFY | 0.072 | 40/315/19.5 | 3.35 | 2.75 | 275 | 76.4 | CO2/870/45 | 940 | 0.47 | 0.415 |
| GFY-31 | GFY | 0.072 | 40/315/19.5 | 3.35 | 2.75 | 275 | 76.4 | CO2/870/45 | 940 | 0.47 | 0.415 |
| GFY-32 | GFY | 0.072 | 40/315/19.5 | 3.35 | 2.75 | 275 | 76.4 | CO2/870/45 | 940 | 0.47 | 0.415 |
| GFY-33 | GFY | 0.072 | 40/315/19.5 | 3.35 | 2.75 | 275 | 76.4 | CO2/870/45 | 940 | 0.47 | 0.415 |
| SH-1 | #SH | 0.061 | 15/420/11.1 | 2.33 | 2.20 | 220 | 90.2 | CO2/850/45 | 955 | 0.47 | 0.330 |
| SH-2 | #SH | 0.061 | 15/420/11.1 | 2.33 | 2.20 | 220 | 90.2 | CO2/850/45 | 955 | 0.47 | 0.330 |
| SH-3 | #SH | 0.061 | 15/420/11.1 | 2.77 | 2.55 | 255 | 90.2 | CO2/850/45 | 1025 | 0.51 | 0.310 |
| SH-4 | #SH | 0.061 | 15/420/11.1 | 2.77 | 2.55 | 255 | 90.2 | CO2/850/45 | 1025 | 0.51 | 0.310 |
| SH-5 | #SH | 0.061 | 15/420/11.1 | 3.25 | 3.05 | 305 | 90.2 | CO2/850/45 | 1085 | 0.53 | 0.295 |
| 4500-1 | #4500 | 0.040 | 15/420/15.8 | 4.10 | 3.80 | 380 | 138 | CO2/870/32 | 1220 | 0..88 | 0.298 |

Table 2-2

| Experiment No. | | Raw material carbon black | | Synthesis conditions | | | | | | First activation step | | |
|---|---|---|---|---|---|---|---|---|---|---|---|---|
| | | Type | Primary particle size | Oxygen treatment step | | | | | | First activation step | | |
| | | | $\mu$m | Oxygen concentration (% by volume)/Oxidation treatment temperature (°C) /mass reduction rate (%) | Content of oxygen (%) | $S_{BET}$/100 | BET ($S_{BET}$) (m$^2$/g) | 5500 /D temperature (°C) /hour (hour) | | Activation gas type /Activation | BET (m$^2$/g) | $\Sigma_{2-6}$ |
| 4500-2 | #4500 | 0.040 | 15/420/15.8 | 4.10 | 3.80 | 380 | 138 | CO2/870/27 | | 1035 | 0.76 | 0.266 |
| 4500-3 | #4500 | 0.040 | 15/420/15.8 | 4.10 | 3.80 | 380 | 138 | CO2/850/42 | | 975 | 0.69 | 0.222 |
| 4500-4 | #4500 | 0.040 | 15/420/15.8 | 4.10 | 3.80 | 380 | 138 | CO2/850/37 | | 920 | 0.58 | 0.232 |
| 4500-5 | #4500 | 0.040 | 15/420/15.8 | 4.10 | 3.80 | 380 | 138 | CO2/850/32 | | 875 | 0.53 | 0.201 |
| 4500-6 | #4500 | 0.040 | 15/400/19.3 | 4.60 | 4.25 | 425 | 138 | CO2/900/18 | | 1220 | 0.69 | 0.489 |
| 4500-7 | #4500 | 0.040 | 15/420/15.8 | 4.10 | 3.80 | 380 | 138 | CO2/960/6 | | 855 | 0.56 | 0.515 |
| 4500-8 | #4500 | 0.040 | 15/380/22.6 | 5.40 | 4.95 | 495 | 138 | CO2/790/135 | | 1286 | 0.74 | 0.513 |
| 200-1 | #200 | 0.029 | 15/390/11.3 | 3.41 | 3.15 | 315 | 190 | CO2/850/30 | | 1330 | 0.90 | 0.134 |
| 200-2 | #200 | 0.029 | 15/390/11.3 | 3.41 | 3.15 | 315 | 190 | CO2/850/30 | | 1330 | 0.90 | 0.134 |
| 200-3 | #200 | 0.029 | 15/390/11.3 | 3.41 | 3.15 | 315 | 190 | CO2/850/30 | | 1330 | 0.90 | 0.134 |
| 200-4 | #200 | 0.029 | 15/390/11.3 | 3.41 | 3.15 | 315 | 190 | CO2/850/30 | | 1330 | 0.90 | 0.134 |
| 200-5 | #200 | 0.029 | 15/390/11.3 | 3.41 | 3.15 | 315 | 190 | CO2/850/40 | | 1475 | 0.97 | 0.156 |
| 200-6 | #200 | 0.029 | 15/390/11.3 | 3.41 | 3.15 | 315 | 190 | CO2/850/40 | | 1475 | 0.97 | 0.156 |
| 200-7 | #200 | 0.029 | 15/420/16.3 | 6.25 | 3.95 | 395 | 190 | CO2/850/40 | | 1485 | 0.97 | 0.256 |
| 200-8 | #200 | 0.029 | 15/490/21.1 | 7.65 | 4.55 | 455 | 190 | CO2/850/40 | | 1495 | 0.97 | 0.325 |
| 200-9 | #200 | 0.029 | 8/550/26.5 | 8.05 | 5.10 | 510 | 190 | CO2/850/40 | | 1510 | 1.05 | 0.435 |

[Table 4]

| Table 2-3 | | | | | | | | | | |
|---|---|---|---|---|---|---|---|---|---|---|
| Experiment No. | Synthesis conditions | | | | | | | Electricity generation characteristics | Durability | Reference |
| | Heat treatment step | | Second activation step | | | | | Low-load output | - | |
| | Temperature (°C) /Heat treatment time (hour) | BET $(m^2/g)$ | Activation gas type /Activation temperature (°C) /hour (hour) | BET $(m^2/g)$ | $\Sigma_{2-6}$ | $\Sigma_{6-10}$ $/\Sigma_{2-6}$ | R = $I_D/I_G$ | - | - | |
| Reference Example -1 | | | - | | | | | D | D | Reference Example |
| Reference Example -2 | | | - | | | | | D | D | Reference Example |
| Reference Example -3 | | | - | | | | | D | D | Reference Example |
| Reference Example -4 | | | - | | | | | D | D | Reference Example |
| GFY-1 | 1600/1 | 320 | None | 320 | 0.20 | 0.43 | 1.40 | D | D | Comparative Example |
| GFY-2 | 1600/1 | 335 | CO2/880/1 | 375 | 0.22 | 0.42 | 1.55 | D | D | Comparative Example |
| GFY-3 | 1600/1 | 340 | CO2/880/1 | 405 | 0.23 | 0.37 | 1.63 | B | B | Example |
| GFY-3 A | 1600/1 | 340 | CO2/880/0.8 | 390 | 0.19 | 0.44 | 1.52 | B | B | Comparative Example |
| GFY-3B | 1600/1 | 340 | CO2/880/5.5 | 785 | 0.31 | 0.51 | 1.70 | B | B | Comparative Example |
| GFY-4 | 1600/1 | 345 | CO2/880/1 | 415 | 0.23 | 0.32 | 1.72 | B | B | Example |
| GFY-5 | 1600/1 | 355 | CO2/880/1 | 430 | 0.24 | 0.32 | 1.68 | B | B | Example |
| GFY-6 | 1600/1 | 365 | CO2/880/1 | 445 | 0.24 | 0.30 | 1.71 | B | B | Example |
| GFY-7 | 1600/1 | 295 | None | 295 | 0.19 | 0.29 | 1.63 | D | D | Comparative Example |
| GFY-8 | 1600/1 | 280 | CO2/880/1.5 | 415 | 0.25 | 0.37 | 1.61 | B | B | Example |
| GFY-9 | 1600/1 | 265 | CO2/880/1.5 | 395 | 0.20 | 0.11 | 1.64 | D | D | Comparative Example |
| GFY-10 | 1600/1 | 310 | None | 310 | 0.19 | 0.33 | 1.62 | D | D | Comparative Example |
| GFY-11 | 1600/1 | 300 | CO2/880/1 | 405 | 0.25 | 0.37 | 1.59 | B | B | Example |
| GFY-12 | 1600/1 | 295 | CO2/880/1 | 385 | 0.21 | 0.10 | 1.63 | D | D | Comparative Example |
| GFY-13 | 1600/1 | 335 | CO2/880/1 | 465 | 0.26 | 0.36 | 1.61 | B | B | Example |

| Table 2-3 | | | | | | | | | | |
|---|---|---|---|---|---|---|---|---|---|---|
| Experiment No. | Synthesis conditions | | | | | | | Electricity generation characteristics | Durability | Reference |
| | Heat treatment step | | Second activation step | | | | | Low-load output | | |
| | Temperature (°C) /Heat treatment time (hour) | BET ($m^2$/g) | Activation gas type /Activation temperature (°C) /hour (hour) | BET ($m^2$/g) | $\Sigma_{2-6}$ | $\Sigma_{6-10}$ /$\Sigma_{2-6}$ | R = $I_D$/$I_G$ | - | - | |
| GFY-14 | 1600/1 | 340 | CO2/880/1 | 485 | 0.27 | 0.35 | 1.62 | B | B | Example |
| GFY-15 | 1600/1 | 345 | CO2/880/1 | 490 | 0.25 | 0.29 | 1.64 | B | B | Example |
| GFY-13 | 1700/1 | 315 | CO2/850/2 | 575 | 0.28 | 0.30 | 1.75 | B | B | Example |
| GFY-14 | 1700/1 | 365 | CO2/850/2 | 625 | 0.29 | 0.31 | 1.82 | A | B | Example |
| GFY-15 | 1700/1 | 390 | CO2/850/2 | 645 | 0.30 | 0.38 | 1.88 | B | B | Example |
| GFY-16 | 1700/1 | 390 | CO2/850/4 | 735 | 0.30 | 0.40 | 1.98 | C | C | Example |
| GFY-17 | 1700/1 | 390 | CO2/850/5 | 790 | 0.32 | 0.44 | 2.21 | B | C | Example |
| GFY-18 | 1700/1 | 405 | CO2/850/3 | 665 | 0.30 | 0.32 | 0.93 | B | B | Example |
| GFY-19 | 1700/1 | 425 | CO2/850/3 | 685 | 0.30 | 0.33 | 1.91 | B | B | Example |
| GFY-20 | 1700/1 | 395 | CO2/850/3 | 655 | 0.29 | 0.51 | 1.94 | D | D | Comparative Example |

[Table 5]

| Table 2-4 | | | | | | | | | | |
|---|---|---|---|---|---|---|---|---|---|---|
| Experiment No. | Synthesis conditions | | | | | | | Electricity generation characteristics | Durability | Reference |
| | Heat treatment step | | Second activation step | | | | | Low-load output | | |
| | Temperature (°C) /Heat treatment time (hour) | BET ($m^2$/g) | Activation gas type /Activation temperature (°C) /hour (hour) | BET ($m^2$/g) | $\Sigma_{2-6}$ | $\Sigma_{6-10}$ /$\Sigma_{2-6}$ | R = $I_D/I_G$ | - | - | |
| GFY-21 | 1300/1 | 880 | CO2/820/1 | 935 | 0.33 | 0.35 | 2.35 | B | D | Comparative Example |
| GFY-22 | 1400/1 | 685 | CO2/820/1 | 730 | 0.27 | 0.35 | 2.18 | A | B | Example |
| GFY-23 | 1600/1 | 490 | CO2/850/1 | 685 | 0.25 | 0.34 | 1.92 | A | B | Example |
| GFY-24 | 1800/1 | 365 | CO2/900/1 | 415 | 0.22 | 0.31 | 1.55 | B | A | Example |
| GFY-25 | 1800/1 | 365 | CO2/900/2 | 485 | 0.24 | 0.34 | 1.65 | B | A | Example |
| GFY-26 | 1800/1 | 365 | CO2/900/3 | 535 | 0.25 | 0.36 | 1.85 | B | A | Example |
| GFY-27 | 1900/1 | 320 | CO2/950/1 | 365 | 0.22 | 0.37 | 1.18 | D | B | Comparative Example |
| GFY-28 | 1900/1 | 320 | CO2/950/1.5 | 425 | 0.37 | 0.42 | 1.35 | C | B | Example |
| GFY-28 A | 2000/1 | 320 | CO2/950/1.5 | 380 | 0.18 | 0.42 | 1.19 | D | B | Comparative Example |
| GFY-29 | 1700/1 | 535 | CO2/900/1 | 655 | 0.25 | 0.32 | 1.55 | B | B | Example |
| GFY-30 | 1700/1 | 535 | CO2/900/1.5 | 735 | 0.27 | 0.33 | 1.52 | A | B | Example |
| GFY-31 | 1700/1 | 535 | CO2/930/2 | 795 | 0.32 | 0.36 | 1.62 | A | B | Example |
| GFY-32 | 1700/1 | 535 | CO2/940/2.5 | 835 | 0.34 | 0.39 | 1.85 | C | B | Example |
| GFY-33 | 1700/1 | 535 | CO2/950/4.5 | 900 | 0.40 | 0.43 | 2.15 | C | C | Example |
| SH-1 | 1600/1 | 555 | CO2/850/2 | 710 | 0.27 | 0.29 | 1.65 | B | B | Example |
| SH-2 | 1700/1 | 455 | CO2/8502 | 625 | 0.25 | 0.30 | 1.45 | B | A | Example |
| SH-3 | 1600/1 | 580 | CO2/850/2 | 735 | 0.28 | 0.29 | 1.60 | A | B | Example |
| SH-4 | 1700/1 | 495 | CO2/850/2 | 685 | 0.26 | 0.30 | 1.40 | B | A | Example |
| SH-5 | 1700/1 | 515 | CO2/850/2 | 720 | 0.27 | 0.32 | 1.45 | A | A | Example |
| 4500-1 | 1700/1 | 765 | CO2/850/1 | 1105 | 0.68 | 0.26 | 1.75 | B | B | Example |

| Table 2-4 | | | | | | | | | | | |
|---|---|---|---|---|---|---|---|---|---|---|---|
| Experiment No. | Synthesis conditions | | | | | | | | Electricity generation characteristics | Durability | Reference |
| | Heat treatment step | | Second activation step | | | | | | Low-load output | | |
| | Temperature (°C) /Heat treatment time (hour) | BET $(m^2/g)$ | Activation gas type /Activation temperature (°C) /hour (hour) | BET $(m^2/g)$ | $\Sigma_{2-6}$ | $\Sigma_{6-10}$ $/\Sigma_{2-6}$ | $R = I_D/I_G$ | - | - | | |
| 4500-2 | 1700/1 | 725 | CO2/850/1 | 1050 | 0.60 | 0.27 | 1.68 | A | B | | Example |
| 4500-3 | 1700/1 | 695 | CO2/850/1 | 985 | 0.57 | 0.26 | 1.64 | A | B | | Example |
| 4500-4 | 1700/1 | 660 | CO2/850/1 | 925 | 0.52 | 0.25 | 1.66 | A | B | | Example |
| 4500-5 | 1700/1 | 615 | CO2/850/1 | 865 | 0.49 | 0.24 | 1.65 | B | B | | Example |
| 4500-6 | 1800/1 | 700 | CO2/900/1.5 | 915 | 0.59 | 0.25 | 1.52 | A | B | | Example |
| 4500-7 | 1700/1 | 695 | CO2/850/1 | 885 | 0.57 | 0.41 | 1.64 | D | D | | Comparative Example |
| 4500-8 | 1800/1 | 735 | CO2/900/1.5 | 975 | 0.63 | 0.39 | 1.56 | D | D | | Comparative Example |
| 200-1 | 1400/1 | 1125 | CO2/850/1 | 1165 | 0.69 | 0.19 | 2.16 | B | B | | Example |
| 200-2 | 1500/1 | 1005 | CO2/850/1 | 1055 | 0.65 | 0.21 | 2.03 | A | B | | Example |
| 200-3 | 1600/1 | 925 | CO2/850/2 | 990 | 0.62 | 0.23 | 1.75 | A | B | | Example |
| 200-4 | 1800/1 | 810 | CO2/900/1 | 925 | 0.52 | 0.22 | 1.53 | A | B | | Example |
| 200-5 | 1800/1 | 865 | CO2/900/1 | 945 | 0.52 | 0.22 | 1.53 | A | B | | Example |
| 200-6 | 1900/1 | 725 | CO2/900/2 | 865 | 0.56 | 0.21 | 1.19 | C | B | | Example |
| 200-7 | 1800/1 | 925 | CO2/900/1 | 1020 | 0.61 | 0.31 | 1.83 | B | B | | Example |
| 200-8 | 1800/1 | 980 | CO2/900/1 | 1095 | 0.68 | 0.35 | 2.01 | B | B | | Example |
| 200-9 | 1800/1 | 1085 | CO2/900/1 | 1210 | 0.71 | 0.39 | 2.23 | D | D | | Comparative Example |

As clear from the above results, the carbon material for a catalyst carrier (porous activated carbon black), corresponding to each of the present Examples, is excellent in electricity generation characteristics (in particular, low-load characteristics) and durability as compared with the carbon material for a catalyst carrier, corresponding to each of Comparative Examples.

It can also be seen that the oxygen-treated carbon black and the activated carbon black each corresponding to the present Examples are suited for producing the carbon material for a catalyst carrier (porous activated carbon black), corresponding to each of the present Examples, excellent in not only electricity generation characteristics (in particular, low-load characteristics), but also durability.

As clear from Reference Examples, not only sufficient electricity generation characteristics (in particular, low-load characteristics), but also durability is not obtained with Ketjen black EC300J, EC600JD, or EC200L manufactured by Lion Corporation, or Printex XE2B manufactured by Orion Engineered Carbons.

In general, application of raw material carbon black having a particle size of more than 40 nm does not allow for development of a pore and does not provide a large BET surface area in activation treatment. However, it has been confirmed that oxygen treatment is performed, whereby a pore applicable to a catalyst carrier can be formed even from raw material carbon black having a primary particle size of 72 nm and a carbon material for a catalyst carrier (porous activated carbon black), excellent in electricity generation characteristics (in particular, low-load characteristics), is obtained. It has also been able to be confirmed that, even in the case of application of raw material carbon black having a primary particle size of 29 nm, a carbon material for a catalyst carrier (porous activated carbon black), excellent in electricity generation characteristics (in particular, low-load characteristics), is obtained as long as optimal oxygen treatment, activation treatment, heat treatment, and second activation treatment are applied. It has been able to be confirmed from these that, in the case of application of raw material carbon black having a primary particle size of from 20 nm to 80 nm, a carbon material for a catalyst carrier (porous activated carbon black), excellent in electricity generation characteristics (in particular, low-load characteristics), is obtained.

The description of reference signs is as follows.

| 100 | solid polymer fuel cell |
|---|---|
| 110, 120 | separator |
| 130, 140 | gas diffusion layer |
| 150, 160 | catalyst layer |
| 170 | electrolyte membrane |

The disclosure of Japanese Patent Application No. 2023-108954 is herein incorporated by reference in its entirety.

All documents, patent applications, and technical standards described herein are herein incorporated by reference, as if each individual document, patent application, and technical standard were specifically and individually indicated to be incorporated by reference.

**Claims**

1. Oxygen-treated carbon black satisfying the following requirement (A):

   (A) a content of oxygen (% by mass) is from $S_{BET}/100$ to 8.00 in a case in which a BET specific surface area calculated by nitrogen gas adsorption is $S_{BET}$ ($m^2$/g).

2. The oxygen-treated carbon black according to claim 1, further satisfying the following requirement (B):
   (B) $S_{BET}$ ($m^2$/g) is from 5500/D to 500 in a case in which the BET specific surface area calculated by nitrogen gas adsorption is $S_{BET}$ ($m^2$/g) and a primary particle size of the oxygen-treated carbon black is D (nm).

3. Activated carbon black simultaneously satisfying the following requirements (C), (D), and (E):

   (C) a BET specific surface area ($m^2$/g) calculated by nitrogen gas adsorption isotherm measurement is from 700 to 1500,
   (D) $\Sigma_{2-6}$ is from 0.22 to less than 1.00 in a case in which an integrated value of a pore volume of a pore having a pore size of from 2 nm to less than 6 nm, in a mesopore distribution determined by analysis of a nitrogen gas adsorption isotherm with a BJH (Barrett Joyner Halenda) method, is $\Sigma_{2-6}$, and
   (E) $\Sigma_{6-10}/\Sigma_{2-6}$ is from 0.100 to 0.490 in a case in which an integrated value of a pore volume of a pore having a pore size of from 2 nm to less than 6 nm is $\Sigma_{2-6}$ and an integrated value of a pore volume of a pore having a pore size of from 6 nm to less than 10 nm is $\Sigma_{6\text{-}10}$, in a mesopore distribution determined by analysis of a nitrogen gas adsorption isotherm with a BJH (Barrett Joyner Halenda) method.

4. A carbon material for a catalyst carrier of a solid polymer fuel cell, the carbon material comprising porous activated carbon black simultaneously satisfying the following requirements (F), (G), (H), and (I):

(F) a BET specific surface area ($m^2/g$) by nitrogen gas adsorption measurement is from 400 to 1200,
(G) $\Sigma_{2\text{-}6}$ is from 0.20 to less than 0.70 in a case in which an integrated value of a pore volume of a pore having a pore size of from 2 nm to less than 6 nm, in a mesopore distribution determined by analysis of a nitrogen gas adsorption isotherm with a BJH (Barrett Joyner Halenda) method, is $\Sigma_{2\text{-}6}$,
(H) $\Sigma_{6\text{-}10}/\Sigma_{2\text{-}6}$ is from 0.120 to 0.500 in a case in which an integrated value of a pore volume of a pore having a pore size of from 2 nm to less than 6 nm is $\Sigma_{2\text{-}6}$ and an integrated value of a pore volume of a pore having a pore size of from 6 nm to less than 10 nm is $\Sigma_{6\text{-}10}$, in a mesopore distribution determined by analysis of a nitrogen gas adsorption isotherm with a BJH (Barrett Joyner Halenda) method, and
(I) $I_D/I_G$ is from 1.20 to 2.20 in a case in which an intensity in a D band of from 1300 to 1360 $cm^{-1}$ is designated as $I_D$ and an intensity in a G band of from 1560 to 1620 $cm^{-1}$ is designated as $I_G$ in a Raman spectrum obtained by Raman spectrometry.

5. A catalyst layer for a solid polymer fuel cell, the catalyst layer comprising the carbon material for a catalyst carrier of a solid polymer fuel cell according to claim 4.

6. A fuel cell comprising the catalyst layer for a solid polymer fuel cell according to claim 5.

7. The fuel cell according to claim 6, wherein the catalyst layer for a solid polymer fuel cell is a catalyst layer on a cathode side.

FIG. 1

100

110    130    150    170    160    140    120

FIG. 2

PORE SIZE DISTRIBUTION BY BJH METHOD

## INTERNATIONAL SEARCH REPORT

International application No.

**PCT/JP2024/023655**

### A. CLASSIFICATION OF SUBJECT MATTER

*C09C 1/48*(2006.01)i; *H01M 4/96*(2006.01)i; *H01M 8/10*(2016.01)i
FI:  C09C1/48; H01M4/96 B; H01M8/10 101

According to International Patent Classification (IPC) or to both national classification and IPC

### B. FIELDS SEARCHED

Minimum documentation searched (classification system followed by classification symbols)

C09C1/00-3/12; H01M4/00-50/77

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 114430049 A (CHINESE PETROCHEMICAL INDUSTRY LTD., CO.) 03 May 2022 (2022-05-03)<br>paragraphs [0152]-[0166] | 1-2 |
| A | entire text, all drawings | 3-7 |
| A | JP 2018-522379 A (CABOT CORPORATION) 09 August 2018 (2018-08-09)<br>entire text, all drawings | 1-7 |
| A | WO 2017/094648 A1 (UNIV YAMANASHI) 08 June 2017 (2017-06-08)<br>entire text, all drawings | 1-7 |
| A | JP 2021-529724 A (IMERTECH) 04 November 2021 (2021-11-04)<br>entire text, all drawings | 1-7 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2024/023655** |

**Box No. III      Observations where unity of invention is lacking (Continuation of item 3 of first sheet)**

This International Searching Authority found multiple inventions in this international application, as follows:

The claims are classified into the following three inventions.

(Invention 1) Claims 1-2
Claim 2 that depends from claim 1 has the same or corresponding technical feature as claim 1.
Accordingly, claims 1-2 are classified as invention 1.

(Invention 2) Claim 3
Claim 3 does not depend from claim 1. Furthermore, claim 3 is not substantially identical to or similarly closely related to any of the claims classified as invention 1.
Moreover, as a result of examining claim 1, claim 3 is not an invention that can be examined substantially without requiring additional prior art search or judgment.
Therefore, claim 3 cannot be classified as invention 1.
Accordingly, claim 3 is classified as invention 2.

(Invention 3) Claims 4-7
Claim 4 and claims 5-7 that depend from claim 4 do not depend from claims 1 or 3. Furthermore, claims 4-7 are not substantially identical to or similarly closely related to any of the claims classified as inventions 1-2.
Moreover, as a result of examining claim 1, claims 4-7 are not an invention that can be examined substantially without requiring additional prior art search or judgment.
Therefore, claims 4-7 cannot be classified as inventions 1-2.
Accordingly, claims 4-7 are classified as invention 3.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**
[ ] The additional search fees were accompanied by the applicant's protest and, where applicable, the payment of a protest fee.
[ ] The additional search fees were accompanied by the applicant's protest but the applicable protest fee was not paid within the time limit specified in the invitation.
[✓] No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/023655**

| Patent document cited in search report | | | Publication date (day/month/year) | Patent family member(s) | | | Publication date (day/month/year) |
|---|---|---|---|---|---|---|---|
| CN | 114430049 | A | 03 May 2022 | (Family: none) | | | |
| JP | 2018-522379 | A | 09 August 2018 | US | 2016/0322634 | A1 | |
| | | | | entire text, all drawings | | | |
| | | | | EP | 3326224 | A1 | |
| | | | | KR | 10-2018-0029060 | A | |
| | | | | CN | 107949937 | A | |
| WO | 2017/094648 | A1 | 08 June 2017 | US | 2019/0030514 | A1 | |
| | | | | entire text, all drawings | | | |
| | | | | EP | 3385336 | A1 | |
| JP | 2021-529724 | A | 04 November 2021 | US | 2021/0147237 | A1 | |
| | | | | entire text, all drawings | | | |
| | | | | EP | 3814430 | A1 | |
| | | | | KR | 10-2021-0024581 | A | |
| | | | | CN | 112534000 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022156985 A
- WO 2020066010 A
- WO 2022085963 A
- JP 2019089021 A
- JP 2017162572 A
- JP 2023108954 A